# EUROPÄISCHE PATENTSCHRIFT

(11) **EP 3 233 261 B1**
(45) Veröffentlichungstag und Bekanntmachung des Hinweises auf die Patenterteilung: **31.10.2018**
(21) Anmeldenummer: 15819809.3
(22) Anmeldetag: 17.12.2015
(51) Int. Cl.: B01J 8/06

(54) **FASEROPTISCHE TEMPERATURMESSUNG IN EINER KATALYSATORSCHÜTTUNG**
FIBRE-OPTIC TEMPERATURE MEASUREMENT IN A CATALYST MATERIAL
MESURE DE TEMPÉRATURE PAR FIBRE OPTIQUE DANS UN LIT DE CATALYSEUR

(30) Priorität: 19.12.2014 DE 102014018825
(43) Veröffentlichungstag der Anmeldung: 25.10.2017
(73) Patentinhaber: MAN Diesel & Turbo SE, 86153 Augsburg (DE)
(72) Erfinder: EGNER, Franz, 94269 Rinchnach (DE); BANK, Rolf, 94469 Deggendorf (DE); BAUER, Andreas, 94529 Aicha vorm Wald (DE); LAINER, Martin, 94469 Deggendorf (DE); VERBEEK, Dieter, 94535 Eging am See (DE)
(86) Internationale Anmeldenummer: PCT/EP2015/080308
(87) Internationale Veröffentlichungsnummer: WO 2016/097190

(56) Entgegenhaltungen:
- EP-A1- 1 270 065
- EP-A1- 2 075 058
- US-A1- 2006 065 064
- US-B1- 7 835 605

## Beschreibung

Die Erfindung bezieht sich auf einen Rohrreaktor gemäß dem Oberbegriff von Anspruch 1.

Zur Durchführung von heterogen katalysierten Gasphasenreaktionen wie Oxidations-, Hydrierungs-, Dehydrierungs-, Nitrierungs- oder Alkylierungsprozessen haben sich in der chemischen Industrie insbesondere Rohrreaktoren als besondere Bauart von Festbettreaktoren bewährt. Rohrreaktoren mit nur einem Rohr finden vorzugsweise als Pilot- oder Laborreaktoren Verwendung. Sind eine Vielzahl von Reaktionsrohren parallel zu einem Bündel angeordnet, so spricht man von einem Rohrbündelreaktor.

Ein solcher Rohrbündelreaktor weist einen Reaktorhauptteil mit einem Bündel vertikal verlaufender Reaktionsrohre auf, in denen sich meist granularer Katalysator und ggf. auch Inertmaterial befindet. Die Reaktionsrohre sind an ihren Enden abdichtend in einem oberen bzw. in einem unteren Rohrboden befestigt. Das Rohrbündel ist von einem Reaktormantel umschlossen. Das Reaktionsgasgemisch wird den Reaktionsrohren über eine den betreffenden Rohrboden überspannende Reaktorhaube zu- und aus den Reaktionsrohren über eine den anderen Rohrboden überspannende Reaktorhaube als Produktgasgemisch abgeführt.

Die Reaktion kann endotherm oder exotherm sein. Stabile Reaktionsbedingungen werden dadurch geschaffen, dass die Außenseiten der Reaktionsrohre von einem Wärmeträger umströmt werden und dass dabei ein definierter Wärmeübergang sichergestellt wird. Bei Forderung eines möglichst guten Wärmeübergangs kann dieser bei einem Wärmeträger ohne Phasenänderung dadurch erreicht werden, dass die Reaktionsrohre quer angeströmt werden. Bei großen Rohrbündelreaktoren wird häufig der Wärmeträger mit ring- und scheibenförmigen Umlenkblechen mäanderförmig durch ein ringförmiges Rohrbündel geführt. Der Wärmeträger wird durch eine außerhalb des Reaktors befindliche Umwälzeinrichtung über Ringkanäle auf den Reaktorumfang verteilt und strömt über eine Vielzahl von Mantelöffnungen in den Mantelraum des Reaktors ein. Der aus dem Reaktor austretende erwärmte Wärmeträger wird in einem außerhalb des Reaktors befindlichen Kühler gekühlt. Durch eine geeignete Strömungsführung kann entlang der Reaktionsrohre ein auf den jeweiligen Prozess optimiertes Temperaturprofil eingestellt werden. Weiterhin ist die Kühlung mit einem verdampfenden Wärmeträger wie Wasser bekannt.

Bei heterogen katalysierten Reaktionen finden die chemischen Reaktionen nur an der Oberfläche der Katalysatorpartikel statt. Der Übergang der Reaktionsfront erfolgt an dem Berührungspunkt zweier Katalysatorpartikel. Dieser Berührungspunkt stellt einen Ort mit einem lokal verminderten Katalysatorangebot dar. Entsprechend ist hier die chemische Reaktion lokal etwas schwächer. Die Wärmeentwicklung hat somit einen wellenförmigen Verlauf mit Maxima im Bereich der Katalysatorpartikel und Minima an den Berührungspunkten derselben. Eine Unterstützung der Reaktion durch Wärmeleitung von einem Partikel auf das andere spielt wegen der geringen Wärmeleitung des meist keramischen Grundmaterials nur eine untergeordnete Rolle.

Bei einer Reihe von katalytischen Gasphasenreaktionen, im Besonderen bei katalytischen Partialoxidationsreaktionen, kommt es im Anfangsbereich des Reaktionsrohrs zu einer verstärkten Wärmeentwicklung unter Ausbildung eines Temperaturmaximums, dem so genannten "Hot Spot". Je nach Art der Reaktion ist dieser Hot Spot in der axialen Ausdehnung und in der Höhe des Temperaturmaximums unterschiedlich ausgeprägt. In dieser Hinsicht zeigen beispielsweise Reaktionen zur Herstellung von Maleinsäureanhydrid, Phthalsäureanhydrid sowie die Methanisierung von CO oder CO2 ausgeprägte Temperaturmaxima. So ist der Hot Spot bezüglich der Gesamtreaktion eine normale Erscheinung und von daher als betriebsmäßiger Hot Spot zu sehen. Für einen stabilen Betrieb wird der Hot Spot wie eingangs beschrieben durch Kühlung mit einem die Reaktionsrohre umspülenden Wärmeträger kontrolliert.

Je nach Reaktionsgeschwindigkeit werden die Rohstoffe in die Produkte umgewandelt, bis die Rohstoffe verbraucht sind. Ist der Rohstoff weitgehend umgesetzt, sinkt die Wärmefreisetzung bei schnellen Reaktionen fast schlagartig gegen Null und die Kühlung des Reaktionsrohres sorgt dafür, dass das Reaktionsgasgemisch rasch die Temperatur des Wärmeträgers annimmt. Je nach Reaktionsgeschwindigkeit können die Hot Spots eine axiale Ausdehnung von nur wenigen Katalysatorpartikeln besitzen.

In Bereichen der Hot Spots besteht eine besondere Gefahr darin, dass die Reaktionen nicht zum gewünschten Produkt umgesetzt werden, sondern beispielsweise bei Partialoxidationsreaktionen eine vollständige Oxidation der Rohstoffe stattfindet. In diesen Fällen kann sich schnell ein nicht betriebsmäßiger Hot Spot mit Temperaturen weit über 700°C entwickeln. Dieser nicht betriebsmäßige Hot Spot kann entgegen der Strömungsrichtung bis zum Reaktionsrohreintritt weiterwandern und dort das in der Reaktoreintrittshaube befindliche Reaktionsgasgemisch zur Explosion bringen. Man spricht in diesem Zusammenhang auch von einem "Durchgehen" der Reaktion.

Zur Beurteilung des Reaktionsablaufs im Reaktor und zur optimalen Steuerung des Reaktionsprozesses hinsichtlich Produktqualität und Umsatz ist die Erfassung der Temperatur innerhalb der Katalysatorschüttung in axialer Richtung von entscheidender Bedeutung. Im Betrieb ist die Kenntnis der Hot-Spot-Temperatur außerordentlich wichtig, damit bei Überschreiten einer zulässigen Temperatur der Prozess entsprechend verändert werden kann. Ansonsten kann es zu einer Schädigung des Katalysators mit einer Verschlechterung von Umsatz, Selektivität und Ausbeute kommen. Die Überwachung der Hot Spot-Temperatur ist besonders bei schnellen exothermen Reaktionen wichtig, weil hier in kurzer Zeit eine relativ große Wärmemenge freigesetzt wird, die sich in einer entsprechenden Temperaturerhöhung des Reaktionsgasgemisches wiederfindet.

Es wurden daher verschiedene Systeme zur Messung der Reaktionstemperaturen entlang eines Reaktionsrohres entwickelt. Um den messtechnischen Aufwand in Grenzen zu halten, werden die Temperaturen nur in einigen wenigen repräsentativen Reaktionsrohren gemessen. Hierzu werden so genannte Thermorohre verwendet. Dies sind besondere Reaktionsrohre mit Temperaturmesseinrichtungen, bei denen im Übrigen jedoch möglichst die gleichen Reaktionsbedingungen eingestellt werden wie in den Reaktionsrohren ohne Temperaturmesseinrichtungen.

Zur Temperaturmessung kommen im Wesentlichen drei Verfahren zum Einsatz. Bei allen Verfahren wird in der Regel ein Schutzrohr mittig in das Thermorohr geführt und mit Abstandshaltern in seiner Position fixiert. Anschließend wird Katalysator in den Ringraum zwischen äußerer Wand des Schutzrohrs und innerer Wand des Thermorohres eingefüllt. Danach wird in das Schutzrohr ein Thermometer eingeführt, welches als Thermoelement oder als Widerstandsthermometer ausgeführt ist, wobei wegen der kleineren Bauweise bevorzugt Thermoelemente verwendet werden. Zur Begrenzung des Einflusses unterschiedlicher Schüttdichten zwischen einem Thermorohr und einem störungsfreien Reaktionsrohr, hervorgerufen durch die Randeffekte am Außenumfang des Schutzrohres, auf die Reaktionsbedingungen und damit auf das im Thermorohr gemessene Temperaturprofil wird der Außendurchmesser des Schutzrohrs möglichst klein ausgeführt. Andererseits wird großer Wert auf eine hinreichende Stabilität und ausreichend Raum zum störungsfreien Einführen des Thermometers in das Schutzrohr gelegt. Weit verbreitet ist die Ausführung des Schutzrohrs mit einem Außendurchmesser von 6,0 mm, in Ausnahmefällen werden auch Schutzrohre mit einem Außendurchmesser von 8,0 mm verwendet.

In der EP 0 873 783 A1 und auch in der EP 1 484 299 A1 werden zwei Verfahren zur Messung der Temperaturen in Reaktionsrohren eines Rohrreaktors bzw. Rohrbündelreaktors vorgestellt. Dabei kommen entweder ein axial bewegliches Einzelthermometer oder ein ortsfestes Stufen-Thermometer zum Einsatz. Beide Thermometer befinden sich in bevorzugt auf der Rohrachse in einem Schutzrohr.

Bei dem ersten Verfahren wird ein Einzelthermometer axial beweglich in dem Schutzrohr geführt. Die Verwendung nur eines einzigen Thermometers erlaubt den Einsatz von Schutzrohren mit kleinen Durchmessern, wodurch der Einfluss auf das Reaktionsgeschehen minimiert wird. Mit diesem Verfahren kann zwar das Temperaturprofil entlang der gesamten Strecke des Reaktionsrohrs lückenlos erfasst werden. Die Messwerte stehen jedoch nicht gleichzeitig zur Verfügung, sondern systembedingt nur mit einem zeitlichen Versatz. Kritische Prozessabschnitte wie der Anfahrvorgang, das Reaktionsverhalten bei Konzentrationsänderungen oder die Entwicklung und Fortbewegung von nicht betriebsmäßigen Hot Spots können nicht sicher überwacht werden, so dass mit dieser Vorgehensweise nur stationäre Prozesse sinnvoll überwacht werden können. Zudem ist die Vorrichtung mechanisch sehr empfindlich.

Bei dem zweiten Verfahren werden mehrere Thermometer axial an unterschiedlichen festen Positionen im Schutzrohr angeordnet. Diese axial mehrfache Anordnung von Thermometern wird auch als "Multipoint-Thermometer" oder als Stufen-Thermometer" bezeichnet. Hier stehen die Temperaturen aller Einzel-Messstellen zeitgleich zur Verfügung. An kritischen Bereichen mit ausgeprägten Temperatur-Maxima kann die örtliche Auflösung durch Verkleinerung der Abstände der Messstellen erhöht werden. Ein Stufen-Thermometer verfügt über ca. 10 bis 15 Messstellen, die Abstände zwischen 200 mm und 400 mm zueinander haben. Bewegt sich oder entsteht ein Hot Spot zwischen zwei Messstellen, insbesondere in Bereichen mit geringerer Messstellendichte, so kann dieser nicht festgestellt werden.

Bei einem dritten Verfahren, das in der EP 2 075 058 A1 beschrieben ist, deckt ein Stufen-Thermometer mit einer maschinellen Positioniereinrichtung den Abstand zweier benachbarter Messstellen ab, wodurch sich kleine Arbeitswege und kurze Zeiten zur Aufnahme eines kontinuierlichen Temperaturprofils über die gesamte Länge eines Thermorohrs ergeben.

In der WO 2014/056588 A1 wird eine faseroptische Temperaturmessung zur Optimierung der Wärmeträgerströme in einem Wärmeübertrager ohne chemische Reaktionen genutzt. Hierbei wird ein optisches Signal in einen temperaturempfindlichen Lichtwellenleiter eingekoppelt. Die reflektierten optischen Signale werden von einer Auswerteeinheit in Temperaturen umgerechnet und ermöglichen so die Ermittlung der Temperaturverteilung entlang der optischen Faser. Hierbei können verschiedene physikalische Effekte wie Raman-Streuung, die Rayleigh-Streuung, die Brillouin-Streuung oder die Streuung am Bragg-Gitter ausgenutzt werden.

Bei der Raman-Streuung macht man sich hier den Effekt zu Nutze, dass in einem Lichtwellenleiter über thermische Effekte Gitterschwingungen induziert werden. Diese Gitterschwingungen sind temperaturabhängig. Wenn Licht auf die Moleküle des Lichtwellenleiters trifft, so ergeben sich mit diesen Wechselwirkungen, die man als Raman-Streuung bezeichnet. Das zurückgestreute Licht besteht aus drei spektralen Gruppen. Die erste Gruppe besteht aus der Rayleigh-Streuung. Diese entspricht der Wellenlänge des eingestrahlten Lichts. Außerdem gibt es ein zu höheren Wellenlängen verschobenes Stokes-Band und ein zu kleineren Wellenlängen verschobenes Anti-Stokes-Band, wobei ersteres nicht temperaturabhängig ist und das zweite temperaturabhängig ist. Mit Frequenztechniken (OFDR: Optical Frequency-Domain Reflectometry) oder Pulstechniken (OTDR: Optical Time-Domain Reflectometry) kann die Temperatur entlang der Faser ortsaufgelöst bestimmt werden. Bei letzterem wird aus der Laufzeitdifferenz zwischen Aussenden und Detektion der Lichtpulse Streupegel und Streuort bestimmt.

Bei der Temperaturbestimmung durch Auswertung der Rayleigh-Streuung werden die Eigenschaften von Lichtwellenleitern ausgenutzt. Diese haben lokale Brechzahlschwankungen oder Defekte, die sich statistisch über die Faser verteilen und als verteilte Reflektoren wirken. Wird Laserlicht in diesen Lichtwellenleiter eingekoppelt, so wird das rückgestreute Rayleigh-Licht mit hoher Auflösung über eine Art Laufzeitmessung räumlich abgetastet. Es ergibt sich ein charakteristisches Muster entlang der Faser, das stabil und reproduzierbar ist. Durch Temperatur- oder Dehnungsänderungen wird dieses Muster in eindeutiger Weise verändert, so dass es sich mit Frequenz- oder Pulstechniken in Temperaturen und Dehnungen umrechnen lässt. Auflösungen kleiner gleich 0,1 mm sind mit diesem Verfahren möglich. Eine Messeinrichtung kann die Signale in Segmente mit einer Länge von z.B. mindestens 1 mm zerlegen.

Zur Temperaturbestimmung in Lichtwellenleitern kann weiterhin die Brillouin-Streuung verwendet werden. Diese ist eine Art der optischen Streuung, die auf einer Wechselwirkung optischer Wellen mit akustischen Gitterschwingungen beruht. Die Temperaturänderung errechnet sich mit Hilfe einer zuvor in den Lichtwellenleiter eingekoppelten und anschließend zurückgestreuten Welle, die in ihrer Frequenz in Abhängigkeit von der Temperatur verringert ist. Mit diesem Verfahren kann ebenfalls ein kontinuierliches Temperaturprofil entlang eines Lichtwellenleiters bestimmt werden.

Ein weiteres für die faseroptische Temperaturmessung verwendetes Verfahren ist die Streuung am Bragg-Gitter. Diese Bragg-Gitter, auch als Faser-Bragg-Gitter bezeichnet, sind in Lichtwellenleitern eingeschriebene optische Bandfilter mit anderen Brechungsindices als die der Lichtwellenleiter. Sie reflektieren Licht mit einer bestimmten Wellenlänge. Oftmals hat jedes Bragg-Gitter eine eigene Wellenlänge. Dadurch ist der Ort der gemessenen Temperatur eindeutig identifizierbar. Die Wellenlänge eines Bragg-Gitters ändert sich in Abhängigkeit von der Temperatur und von Dehnungen. Soll nur die Temperatur gemessen werden, so muss der Lichtwellenleiter dehnungsentlastet werden, bei Messungen nur von Dehnungen muss der Temperatureinfluss kompensiert werden.

Der Standardmessbereich bei Temperaturmessgeräten mit Bragg-Gittern erstreckt sich in der Regel bis etwa 300°C. Der Messbereich kann jedoch deutlich erweitert werden, wenn die Bragg-Gitter wärmebehandelt werden. Aus "Canning, J. et al.: Regenerated gratings, Journal Of The European Optical Society - Rapid Publications 4, 09052 (2009) [doi:10.2971/jeos.2009.09052]" sind Bragg-Gitter mit einer Temperaturbeständigkeit bis 1100°C bekannt, die durch ein Regenerierungsverfahren erreicht wurde. In der US 7,835,605 B1 z.B. ist das Einschreiben von Bragg-Gittern in eine optische Faser mit einer thermischen Vorbehandlung und einer Nachbehandlung beschrieben, wodurch eine Temperaturbeständigkeit bis zu 1200°C erreicht werden kann.

Die DE 10 2004 031 324 A1 stellt ein Verfahren zur Ermittlung eines Temperaturprofils in apparativen Einrichtungen und Produktionsanlagen der chemisch-pharmazeutischen Industrie unter Verwendung von Glasfasern mit Faser-Bragg-Gittern vor. Der Mindestabstand der Messstellen entlang der Glasfaser ist mit 5 mm angegeben. Der zu kontrollierende Temperaturbereich liegt zwischen - 60°C und 1150°C.

In einem Produktinformationsblatt der Bayer Technology Services wird ein Temperaturmessgerät mit der Bezeichnung "SpectroBAY MultiTemp" zur Bestimmung von Temperaturprofilen beschrieben. Das Gerät verfügt über mehrere Kanäle für den Anschluss von Glasfaserthermometerlinien, wobei maximal etwa 30 Messstellen pro Faserstrang vorhanden sind. Es ist zeit- und parallelmultiplexfähig. Der Temperaturmessbereich liegt zwischen 0°C bis 600°C. Als ein typisches Anwendungsfeld ist u.a. die Temperaturverlaufsmessung an Rohrreaktoren ggf. mit Katalysator-Füllung und die Erkennung der Bildung von Hot-Spots angegeben. Allerdings ist mit der relativ geringen Anzahl von Messstellen die Aufnahme eines kontinuierlichen Temperaturprofils bei üblichen Rohrbündelreaktoren mit Reaktionsrohrlängen im Bereich zwischen 3 und 10 Metern nicht möglich.

Andere kommerziell erhältliche Temperaturmessgeräte mit Lichtwellenleiter werden z.B. von der Fa. Polytec angeboten. Bei Geräten der Baureihe "ODiSI" wird die Rayleigh-Streuung ausgewertet. Die gesamte Faser stellt in ihrer vollen Länge einen quasi-kontinuierlichen Messsensor dar mit einer maximalen Auflösung von 1 mm. Die maximalen Anwendungstemperaturen liegen mit Standard-Lichtwellenleiter bei 300°C und mit Spezial-Lichtwellenleiter bei 800°C. Eine andere Baureihe hat ähnliche Eigenschaften mit Unterschieden in der Länge der Messstrecken und der Auflösung. Geräte der Baureihe "DSS" arbeiten mit Bragg-Gittern. Die Auflösung beträgt 1 cm, die Messgeschwindigkeit 3 Hz. Die Bragg-Gitter können kontinuierlich in den Lichtwellenleiter eingeschrieben werden, die Sensorpositionen und Sensorlängen sind frei konfigurierbar.

Im Falle der Auswertung von Raman-, Rayleigh- oder Brillouin-Streuung liegen die Messwerte kontinuierlich über die gesamte Länge des Lichtwellenleiters vor. Die Auswertung aller Signale mit höchstmöglicher Auflösung der Auswerteeinheit, um ein kontinuierliches Temperaturprofil längs des Reaktionsrohres zu ermitteln, erfordert eine sehr große Rechenleistung. Andernfalls würde die Auswertegeschwindigkeit so weit absinken, dass sich die Temperaturanzeige um mehrere Sekunden verzögern würde. Die faseroptische Temperaturmessung mit Hilfe von Bragg-Gittern erlaubt hingegen nur eine begrenzte Auflösung, die nicht in allen Fällen ein sicheres Erkennen von Hot Spots gewährleistet.

Demgegenüber liegt die Aufgabe der Erfindung darin, einen Rohrreaktor der eingangs genannten Art so zu verbessern, dass mit wirtschaftlich vertretbarem Aufwand jedes Auftreten von Hot Spots sicher und nahezu in Echtzeit erkannt wird.

Erfindungsgemäß wird diese Aufgabe bei einem gattungsgemäßen Rohrreaktor durch die kennzeichnenden Merkmale des Anspruchs 1 gelöst.

Der Erfindung liegt die Erkenntnis zugrunde, dass die Anfangsausdehnung insbesondere eines nicht betriebsmäßigen Hot Spots der Größe eines Katalysatorpartikels entspricht, bzw. dass die Ausbreitungsgeschwindigkeit eines Hot Spots innerhalb eines Katalysatorpartikels so groß ist, dass eine Suche nach Hot Spots, die kleiner sind als ein Katalysatorpartikel, technisch keinen Sinn macht. Die Erfindung macht sich diese Erkenntnis zunutze und ordnet die Messstellen mit einem Abstand zwischen benachbarten Messstellen an, der abhängig von der Partikelgröße ist. Es hat sich herausgestellt, dass bei einer Katalysatorschüttung, deren Partikeln Nenn-Außenabmessungen zugeordnet sind, Hot Spots sicher erkannt werden, wenn der Abstand benachbarter Messstellen in Axialrichtung des Thermorohrs das 0,8- bis 5-fache der kürzesten Kantenlänge aller gedachten Quader beträgt, die mit minimalem Volumen jeweils ein Partikel unter der Annahme begrenzen, dass das Partikel seine Nenn-Außenabmessung aufweist. Wenn den Partikeln der Katalysatorschüttung keine Nenn-Außenabmessungen zugeordnet sind, hat sich herausgestellt, dass Hot Spots sicher erkannt werden, wenn der Abstand benachbarter Messstellen in Axialrichtung des Thermorohrs das 0,8- bis 5-fache der kürzesten Kantenlänge aller gedachten Quader beträgt, die mit minimalem Volumen jeweils diejenigen Partikel begrenzen, die zu einem Massenanteil von minimal 70 % der Katalysatorschüttung gehören, zu dem sämtliche Partikel mit gedachten Quadern gehören, bei denen jede Kantenlänge länger ist als die kürzeste Kantenlänge. Bei solchen Abständen zwischen benachbarten Messstellen ist gewährleistet, dass diese Abstände einerseits klein genug sind, um ein frühzeitiges Erkennen von Hot Spots zu gewährleisten. Andererseits wird durch die erfindungsgemäßen Maßnahmen vermieden, dass aufgrund zu kleiner Abstände die Auswertung der Messwerte so rechenintensiv wird, dass eine Temperaturanzeige in Echtzeit oder zumindest in Quasi-Echtzeit mit Verzögerungen von maximal 5 Sekunden nur mit sehr hohem Kostenaufwand möglich ist. Mit den erfindungsgemäßen Abständen zwischen benachbarten Messstellen ist daher eine Temperaturanzeige in (Quasi-)Echtzeit mit einer relativ kostengünstigen Auswerteeinheit, d. h. mit wirtschaftlich vertretbarem Aufwand, möglich.

Mit den erfindungsgemäßen Maßnahmen können die Temperaturprofile in einer Katalysatorschüttung mit einer hohen Auflösung unter Verwendung einer kompakten Messapparatur ermittelt werden. Da ein Lichtwellenleiter eine hohe Messstellendichte in Längsrichtung bei nur geringem Außendurchmesser ermöglicht, kann zum einen der Außendurchmesser des Schutzrohrs ebenfalls klein sein. Dadurch wird die Reaktion nur minimal beeinflusst und liefert der Lichtwellenleiter somit ein bezüglich einem Reaktionsrohr ohne Einbauten repräsentatives Temperaturprofil. Aufgrund der hohen Messstellendichte kann die Konstruktion zum anderen ortsfest, d. h. ohne bewegliche Teile, sein, sodass die Konstruktion mechanisch unempfindlich ist.

Die Auswahl des Faktors 0,8- bis 5-fach richtet sich nach der erwarteten axialen Ausdehnung eines Hot Spots, die wiederum abhängig ist von der Art der Reaktion. Kleine axiale Ausdehnungen des Hot Spots erfordern eine höhere Auflösung mit kleineren Abständen und umgekehrt.

Durch die zeitgleiche Überwachung des kompletten Temperaturprofils können dynamische Vorgänge gut erkannt werden. Wenn mehrere Thermorohre im Rohrbündel radial verteilt sind, liegt eine detaillierte Temperaturverteilung in axialer und in radialer Richtung des Rohrbündelreaktors gleichzeitig vor und können schnell eventuell erforderliche Maßnahmen ergriffen werden, wie z. B. Volumenstrom- oder Konzentrationsänderungen.

Ein erfindungsgemäßer Rohrreaktor weist in seiner einfachsten Ausführung ausschließlich ein einzelnes Thermorohr auf. Ein solcher Rohrreaktor kann als Versuchseinrichtung zur Prozessoptimierung verwendet werden.

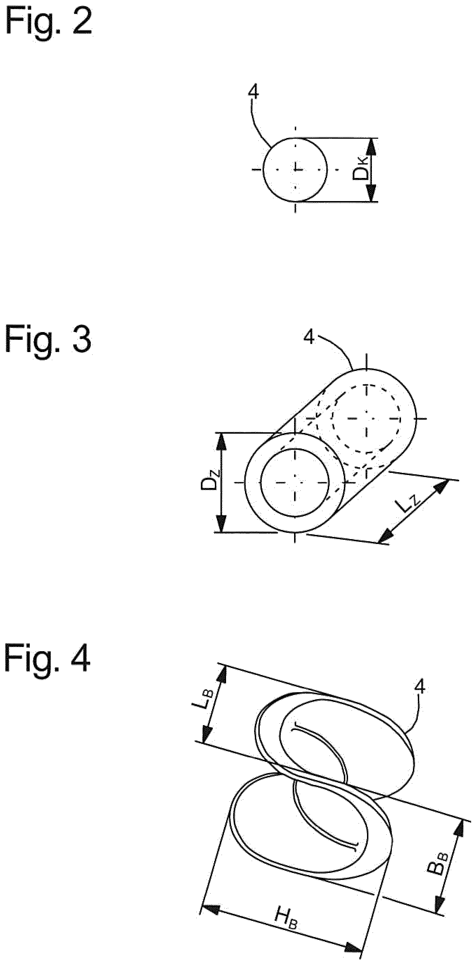

Als Beispiele für Katalysatorpartikel und die sie mit minimalem Volumen begrenzenden Quader sind in den Figuren 2 bis 4 Katalysatorpartikel in Form einer Kugel, eines Hohlzylinders und eines Berl-Sattelkörpers sowie jeweils deren für den gedachten Quader maßgebenden Außenabmessungen dargestellt bzw. angegeben.

Im Fall eines kugelförmigen Katalysatorpartikels ist es der Außendurchmesser D_{K} (Figur 2). Der gedachte Quader ist in diesem Fall ein Würfel und die kürzeste Kantenlänge die Kantenlänge D_{K} des Würfels.

Im Fall eines zylinder- oder hohlzylinderförmigen Katalysatorpartikels sind die Kantenlängen des gedachten Quaders durch den Außendurchmesser D_{Z} und die Länge L_{Z} des Zylinders bestimmt (Figur 3). Wenn D_{Z} < L_{Z}, dann ist die kürzeste Kantenlänge des gedachten Quaders der Durchmesser D_{Z}. Wenn D_{Z} > L_{Z}, dann ist die kürzeste Kantenlänge des gedachten Quaders die Zylinderlänge L_{Z}. Wenn D_{Z} = L_{Z}, ist der gedachte Quader ein Würfel und die kürzeste Kantenlänge L_{Z} bzw. D_{Z}.

Bei einem Katalysatorpartikel in Form eines Berl-Sattelkörpers entsprechen die Kantenlängen des gedachten Quaders den Außenabmessungen L_{B}, B_{B} und H_{B} (Figur 4). Die kürzeste Kantenlänge des gedachten Quaders ist die kürzeste der Abmessungen L_{B}, B_{B} oder H_{B}.

Sind den Katalysatorpartikeln Nenn-Außenabmessungen zugeordnet, im Fall der oben angegebenen Beispiele also den erwähnten Außenabmessungen Nennwerte zugeordnet, so entsprechen erfindungsgemäß die Kantenlängen der gedachten Quader diesen Nenn-Außenabmessungen der Katalysatorpartikel.

Sind den Partikeln der Katalysatorschüttung keine Nenn-Außenabmessungen zugeordnet, so entsprechen erfindungsgemäß die Kantenlängen der gedachten Quader den entsprechenden Ist-Außenabmessungen der Katalysatorpartikel.

Diese Ist-Außenabmessungen könnten beispielsweise durch Messungen mit einer Schieblehre ermittelt werden. Dies entspricht der Ermittlung dreier jeweils senkrecht aufeinander stehender Feret-Durchmessser, deren Produkt das Volumen eines das Partikel begrenzenden Quaders darstellt. Abhängig von der Ausrichtung der Dreiergruppe von drei senkrecht zueinander stehenden Messwerten relativ zum Partikel ergeben sich unterschiedliche Messwerte bzw. Kantenlängen und damit unterschiedliche Volumina. Maßgebend für die Zwecke der Erfindung ist für jedes Partikel der ihn begrenzende Quader mit dem minimalen Volumen und bei diesem die kürzeste Kantelänge. Der gewünschte Massenanteil wird durch einen Wiegevorgang mit anschließender Summenbildung festgestellt, wobei das Gewicht einzelner Partikel ermittelt und aufsummiert wird.

Die dem Abstand benachbarter Messstellen zugrunde zu legende kürzeste Kantenlänge ist die kürzeste Kantenlänge desjenigen Quaders bzw. zugehörigen Partikels, mit dem bei der Summation der Gewichte der einzelnen Partikel in der Reihenfolge der Größe der jeweiligen kürzesten Kantenlängen, beginnend mit dem Partikel mit der größten der kürzesten Kantenlänge, ein Gewichtsanteil von mindestens 70 % an der Katalysatorschüttung erreicht wird.

Wesentlich einfacher und schneller und für die industrielle Anwendung geeignet können die kürzesten Kantenlängen aufgrund der Ist-Abmessungen der Partikel mittels eines Siebvorganges und eines sich anschießenden Wiegevorganges ermittelt werden.

So kann die Katalysatorschüttung in einem Siebturm mit einer Laborsiebmaschine trocken klassiert werden. Der Siebturm weist eine Vielzahl von Spaltsieben mit vorgegebenen Spaltweiten und einer vorgegebenen Abstufung der Spaltweiten auf. Das Siebgut - die Katalysatorschüttung - wird auf das oberste Spaltsieb mit der größten Spaltweite aufgegeben. Die kürzeste Kantenlänge eines gedachten Quaders, der mit minimalem Volumen das Katalysatorpartikel begrenzt, ist bestimmend dafür, ob das Partikel durch die Spalte bzw. Schlitze fällt oder auf dem Spaltsieb liegen bleibt. Nach Abschluss des Siebvorganges werden die auf den einzelnen Sieben liegen gebliebenen Anteile der Katalysatorschüttung gewogen und so jeder Massenanteil der auf einem Spaltsieb liegenden Partikel an der Gesamtmasse der Katalysatorschüttung ermittelt.

Durch Summation der Massenanteile in der Reihenfolge der Spaltsiebe, beginnend bei dem obersten Spaltsieb, bis zum Erreichen des gewünschten Summenanteils von minimal 70 % wird der Quader (das Partikel) bzw. das Spaltsieb ermittelt, dessen kürzeste Kantenlänge bzw. dessen Spaltweite für die Zwecke der Erfindung maßgebend ist.

Ergibt die Summation der Gewichts-/Massenanteile bis zu einem Spaltsieb n den gewünschten Summenanteil (z. B. genau 70 %), so wird die Spaltweite dieses Spaltsiebes n als die maßgebende kürzeste Kantenlänge bestimmt.

Liegt der gewünschte Summenanteil zwischen den Summenanteilen bis zu Spaltsieben n und n + 1, so wird die maßgebende kürzeste Kantenlänge durch lineare Interpolation zwischen den Spaltweiten dieser beiden Spaltsiebe im Verhältnis zu deren Massenanteilen ermittelt.

Sollen die Reaktionsrohre und die Thermorohre mit einer homogenen Katalysatorschüttung gefüllt werden, kann dieser eine repräsentative Zufallsstichprobe entnommen werden, beispielsweise mit einem Riffelteiler. Diese Stichprobe wird dann an Stelle der gesamten Katalysatorschüttung dem Siebturm zugeführt und wie oben beschrieben trocken klassiert und ausgewertet.

Die vorgesehenen Spaltsiebe zur Bestimmung der Partikelgrößenverteilung sind in der DIN 4185-3, z. B. Ausgabe von 1965, näher beschrieben. Die Siebe weisen bei der vorgesehenen Konstruktion in einer bevorzugten Ausführungsform Siebroste mit Profilstäben auf, welche in ihrem oberen Bereich parallele Flächen aufweisen, also z. B. Profilstäbe mit Parallelkopf oder Parallel-Dachkopf gemäß den Beispielen 5.1.1.2 bzw. 5.1.1.4 der Norm. Die Spaltabstände werden bevorzugt mit Distanzscheiben gemäß Beispiel Nr. 5.1.2 der Norm eingestellt, vorzugsweise auf 0,05 mm. Das anzuwendende Siebungsverfahren ist in der Norm DIN 66165-1 (Grundlage) und DIN 66165-2 (Durchführung) genormt.

In günstiger Ausgestaltung der Erfindung ist in der Katalysatorschüttung des Thermorohrs ein Schutzrohr angeordnet und verläuft der Lichtwellenleiter mit Kapillarrohr in dem Schutzrohr. Obwohl der Lichtwellenleiter bereits in einem Kapillarrohr geführt ist, wird der Lichtwellenleiter mit Kapillarrohr bevorzugt noch in einem Schutzrohr in der Katalysatorschüttung des Thermorohrs angeordnet. Neben dem Schutz vor mechanischer Beschädigung des Kapillarrohrs und des Lichtwellenleiters durch Katalysatorpartikel verhindert das Schutzrohr, dass das Kapillarrohr mit Lichtwellenleiter beim Einführen in die Katalysatorschüttung an Katalysatorpartikeln hängen bleibt und/oder durch diese lokal gewölbt wird, wodurch sich die Abstände zwischen benachbarten Messstellen verändern könnten. Das Schutzrohr gewährleistet somit, dass der Lichtwellenleiter in dem Kapillarrohr seinen geraden Verlauf und damit die Abstände zwischen benachbarten Messstellen beibehält.

Vorzugsweise beträgt der Massenanteil minimal 80 %, weiter bevorzugt minimal 90 % und besonders bevorzugt minimal 95 %. Mit größer werdendem Massenanteil, d. h. mit kürzerer "kürzester Kantenlänge", ist auch bei Katalysatorschüttungen mit einer sehr breiten Streuung und einem relativ großen Anteil an kleinen Katalysatorpartikeln sichergestellt, dass die Abmessungen dieser kleineren Katalysatorpartikel - d. h. die kürzeste Kantenlänge der sie mit minimalem Volumen begrenzenden Quader - ausreichend Berücksichtigung findet.

Ein bei einem erfindungsgemäßen Rohrreaktor verwendeter Lichtwellenleiter weist in seinem Kern vorzugsweise eine dotierte Glasfaser auf, besonders bevorzugt aus Quarzglas, mit einem Außendurchmesser im Bereich von 0,05 bis 0,25 mm. Zum mechanischen Schutz ist sie bevorzugt von einem Fasermantel umgeben, der auf seiner Außenseite eine dünne Beschichtung aufweist. Der Außendurchmesser des Lichtwellenleiters einschließlich Beschichtung liegt im Bereich von 0,1 bis 0,4 mm, bevorzugt zwischen 0,15 und 0,25 mm.

Zum weiteren mechanischen Schutz wird der Lichtwellenleiter in das Kapillarrohr geführt. Dessen Werkstoff muss keine besonderen Anforderungen erfüllen, außer dass er der Betriebstemperatur des Prozesses dauerhaft standhalten muss. Bevorzugt besteht das Kapillarrohr aus Stahl. Vereinfachend wird im Folgenden das Kapillarrohr einschließlich des Lichtwellenleiters auch als Messkapillare bezeichnet. Der Innendurchmesser des Kapillarrohrs ist so bemessen, dass zum Außendurchmesser des Lichtwellenleiters eine Durchmesserdifferenz zwischen 0,35 mm und 0,5 mm verbleibt, so dass der Lichtwellenleiter leicht in das Kapillarrohr einführbar ist. Das Kapillarrohr kann auch ein biegsames Metallrohr sein, z.B. in der Ausführung als Spiralschlauch aus Metall.

Ein Kapillarrohr ist jedoch vorzugsweise hart und gerade, damit es leicht in das Schutzrohr eingeführt werden kann. Denn eine Messkapillare ist immer noch recht empfindlich gegen mechanische Beschädigung; zu ihrem weiteren Schutz dient das Schutzrohr.

Beim Transport wird das Kapillarrohr gegen Knicken geschützt, beispielsweise durch Verpacken in einem stabilen Rohr. Bei beengten Transport-Platzverhältnissen kann es sinnvoll sein, das Kapillarrohr aus einem weichen Metall zu fertigen. Dieses erhält man, indem ein hartes Standard-Kapillarrohr geglüht und somit dessen Festigkeit herabgesetzt wird. Ein solches weiches geglühtes Stahlrohr lässt sich auf einer Rolle aufwickeln und gut transportieren. Bevor dieses weiche Stahlrohr in das Schutzrohr eingeführt wird, muss es zunächst wieder gerade gebogen werden. Dies kann beispielsweise durch eine einfache Vorrichtung geschehen, in welcher das Stahlrohr in Rollen geführt und so gebogen wird, dass es wieder seine ursprüngliche gerade Form zurückerhält.

Ein Schutzrohr ist vorzugsweise ebenfalls ein gerades Rohr aus hartem Material und wird einstückig in ein Thermorohr eingeführt. Falls erforderlich, kann es z. B. leicht dadurch verlängert werden, dass zwei gerade und stumpfe Enden mit einer möglichst kleinen, jedoch stabilen Muffe miteinander verbunden werden.

Ein Schutzrohr besteht bevorzugt ebenfalls aus Stahl und hat eine Wandstärke zwischen 0,4 mm und 1,2 mm, bevorzugt eine Wandstärke zwischen 0,8 mm und 1,1 mm. Zur Begrenzung der die Reaktion beeinflussenden Randgängigkeit ist der Außendurchmesser des Schutzrohrs so klein wie möglich, jedoch ist der Innen- bzw. lichte Querschnitt so groß, dass die Messkapillare ohne Behinderung in das Schutzrohr eingeführt werden kann. Das Schutzrohr hat bevorzugt einen Außendurchmesser zwischen 2,0 mm und 4,0 mm und besonders bevorzugt zwischen 2,6 mm und 3,2 mm.

Eine beispielhafte Ausführungsform eines Thermorohrs könnte ein Schutzrohr mit einem Außendurchmesser von 4,0 mm und einem Innendurchmesser von 2,0 mm aufweisen. Darin befindet sich ein Kapillarrohr mit einem Außendurchmesser von 1,6 mm und einem Innendurchmesser von 0,6 mm, in dem sich ein Lichtwellenleiter mit einem Außendurchmesser von 0,25 mm befindet. Wenn höhere Anforderungen an die Messgenauigkeit gestellt werden, muss geprüft werden, ob die Abmessungen verkleinert werden können, z.B. ob ein Schutzrohr mit einem Außendurchmesser von 3,2 mm und einem Innendurchmesser von 2,0 mm verwendet werden kann oder ob die Wandstärke des Schutzrohrs weniger stark vermindert werden kann und stattdessen die Dimensionen der im Schutzrohr gelegenen Teile angepasst werden können.

Sowohl bei einem Versuchsreaktor mit nur einem Rohr - einem Thermorohr- als auch bei einem Großreaktor mit zusätzlich einer Vielzahl an Reaktionsrohren wird üblicherweise der Reaktor zunächst vom Hersteller einschließlich Schutzrohr(e) zusammengebaut und am Bestimmungsort aufgestellt.

Bei der Montage wird das noch leere Schutzrohr mit Abstandshaltern bevorzugt auf der Rohrachse in das noch katalysatorfreie Thermorohr geführt. Die mittige Lage im Rohr ist wichtig, weil dort in radialer Richtung die höchste Reaktionstemperatur zu erwarten ist. Der axiale Abstand zweier benachbarter Abstandshalter beträgt bevorzugt das 10- bis 30-fache des Rohrinnendurchmessers. Anschließend wird die Messkapillare in das Schutzrohr geführt. Das Schutzrohr kann entweder einteilig oder aus mehreren Teilen zusammengesetzt sein. Optional kann es auch mit einem Kompensator dehnungsentlastet werden.

In günstiger Weiterbildung der Erfindung beträgt in dem axialen Thermorohrabschnitt vorgegebener Länge der Abstand benachbarter Messstellen in Axialrichtung des Thermorohrs das 1- bis 3-fache und weiter bevorzugt das 1- bis 2-fache der besagten kürzesten Kantenlänge. Je weniger die Abstände benachbarter Messstellen von der maßgebenden Partikelgröße abweichen, umso geringer ist das Risiko, dass sich zwischen den Messstellen unerkannt ein Hot Spot entwickelt.

Die Abstände benachbarter Messstellen sind bevorzugt gleich. Fallweise können die Abstände jedoch auch unterschiedlich festgelegt werden. Beispielsweise können die Abstände in kritischen Bereichen - z. B. dort, wo Hot Spots auftreten können - kleiner gewählt werden, z.B. das 1-fache der besagten kürzesten Kantenlänge. In den übrigen Bereichen könnten Abstände von z.B. dem 2-fachen der besagten kürzesten Kantenlänge vorgesehen werden. Diese Abstufung ist in den nicht kritischen Bereichen immer noch genau genug, um ein quasi-kontinuierliches Temperaturprofil aufzunehmen. Durch die Verringerung der Messstellenanzahl kann andererseits die Messgeschwindigkeit deutlich erhöht werden. Die Messstellendichte kann entweder auf eine größere Ortsauflösung - d. h. auf kleinere Abstände - bei geringerer Mess- bzw. Auswertegeschwindigkeit oder auf hohe Auswertegeschwindigkeit bei geringerer Ortsauflösung ausgelegt werden.

Vorteilhafterweise beträgt in dem axialen Thermorohrabschnitt vorgegebener Länge der Abstand benachbarter Messstellen in Axialrichtung des Thermorohrs mindestens 0,5 mm. Bei einem Abstand benachbarter Messstellen von 0,5 mm verschmelzen die miteinander verbundenen Temperaturwerte zu einem nahezu kontinuierlichen Temperaturprofil in Längsrichtung des Thermorohrs. Wenn die Abstände benachbarter Messstellen noch kleiner wären als 0,5 mm, so würde dies zu keiner Veränderung des ausgewerteten Temperaturprofils mehr führen, da innerhalb dieses Intervalls keine eigenständigen Hot Spots auftreten. Diese wären auch deshalb nicht mehr nachweisbar, da es wie bei jedem länglichen Thermometer auch eine Temperaturleitung in axialer Richtung gibt, wodurch das Temperaturprofil immer etwas "geglättet" wird. Dieser Effekt ist jedoch bei den hier vorliegenden kurzen radialen Wärmeleitungswegen und der hohen axialen Messstellendichte vernachlässigbar.

Die Abstände benachbarter Messstellen auf dem Lichtwellenleiter betragen bevorzugt höchstens 9 mm und werden weiter bevorzugt auf einen Größenbereich von 1 bis 4 mm eingestellt.

Es liegen zwar diskrete Temperaturmessstellen vor. Die Abstände solcher benachbarter Temperaturmessstellen sind jedoch so klein, dass bei Verbindung der Temperaturmesspunkte diese zu einem quasi-kontinuierlichen Temperaturprofil verschmelzen.

In einer bevorzugten Ausführungsform der Erfindung enthält der Rohrreaktor zusätzlich mindestens ein katalysatorgefülltes Reaktionsrohr. Um die Abweichung der Reaktionsbedingungen und damit des Temperaturprofils des Thermorohres zu einem Reaktionsrohr mit gleichen Abmessungen so gering wie möglich zu halten, soll die Katalysatorschüttung hinsichtlich ihrer Reaktionswirkung der der Reaktionsrohre entsprechen.

Bei einem solchen Rohrreaktor, der mit beispielsweise einem Thermorohr und einem Reaktionsrohr als Versuchseinrichtung verwendet wird, kann man die Temperaturprofile von Reaktionsrohren mit und ohne Temperaturmesseinrichtung mittels bekannter Verfahren indirekt vergleichen. Durch die erhaltenen Vergleichsergebnisse kann von den Temperaturen in einem Thermorohr auf die Bedingungen in einem Reaktionsrohr geschlossen werden.

Werden eine Vielzahl von Reaktionsrohren und eine kleinere Anzahl von Thermorohren vorgesehen, so erhält man einen klassischen Rohrbündelreaktor mit Rohrzahlen zwischen 1000 und 55000, bevorzugt zwischen 15000 und 40000 Rohren. Bei einem solchen Reaktor sind die Thermo- und die Reaktionsrohre als vorzugsweise kreisrundes oder kreisringförmiges Rohrbündel angeordnet; ihre Enden sind abdichtend in Rohrböden befestigt und im Betrieb werden sie von einem fluiden Wärmeträger umströmt. Der Reaktor weist ferner einen Reaktormantel, der das Rohrbündel umschließt, eine Gaseintrittshaube, die einen der Rohrböden überspannt, und eine Gasaustrittshaube auf, die den anderen Rohrboden überspannt, wobei die Reaktions- und die Thermorohre mit der Gaseintritts- und der Gasaustrittshaube in Strömungsverbindung stehen. Die Abmessungen eines solchen Rohrbündelreaktors entsprechen im Übrigen denjenigen bekannter Ausführungen. Probenahmestellen für das Reaktionsgas am Anfang und am Ende der Thermo- oder Reaktionsrohre werden hier vorzugsweise nicht vorgesehen. Die erfindungsgemäßen Merkmale sind nicht auf den Einsatz in vorbeschriebenen Rohrbündelreaktoren beschränkt. Sie können gleichermaßen Verwendung finden z.B. in Rohrbündelreaktoren mit mehreren Wärmeträgerzonen oder in Rohrbündeln mit nicht kreisrundem oder nicht kreisringförmigem Querschnitt. Der verwendete Wärmeträger ist ebenfalls nicht weiter eingeschränkt. So können auch Wärmeträgeröle, ionische Flüssigkeiten oder auch verdampfende Wärmeträger wie Wasser verwendet werden. Ein bevorzugter Wärmeträger ist jedoch flüssiges Salz. Die Auswahl des Wärmeträgers wird in Abhängigkeit von der optimalen Temperatur des Prozess und betrieblichen Erwägungen bestimmt.

In günstiger Weiterbildung der Erfindung sind der Lichtwellenleiter, das Kapillarrohr und das Schutzrohr temperaturbeständig bis 1000° C, weiter bevorzugt bis 800° C und besonders bevorzugt bis 700° C temperaturbeständig. Herkömmliche Lichtwellenleiter mit Standardfasern arbeiten bei Temperaturen zwischen -50°C und 300°C. Die Temperaturen bei katalytischen Gasphasenreaktionen liegen jedoch meistens im Bereich zwischen 300°C und 500°C. Die Hot-Spot-Temperaturen können lokal noch etwas höher sein. Erfindungsgemäß werden daher Lichtwellenleiter mit einer hohen Temperaturbeständigkeit von 1000°C, bevorzugt bis 800°C und besonders bevorzugt bis 700°C verwendet. Bei Lichtwellenleitern für die Auswertung von Raman-, Rayleigh- oder Brillouin-Streuung muss sichergestellt sein, dass das Grundmaterial des verwendeten Lichtwellenleiters für die vorgesehenen Betriebstemperaturen geeignet sind. Bei Ausnutzung der Streuung am Bragg-Gitter werden die entsprechenden Lichtwellenleiter nach einem Verfahren entsprechend dem Stand der Technik ertüchtigt, z.B. durch eine geeignete Wärmebehandlung.

In vorteilhafter Ausgestaltung der Erfindung ist die Auswerteeinheit dazu eingerichtet, durch Raman-Streuung und/oder durch Rayleigh-Streuung und/oder durch Brillouin-Streuung entstehende optische Signale auszuwerten. Durch die Auswertung dieser Streuungen ist es möglich, die auszuwertenden Messstellen entlang des Lichtwellenleiters beliebig festzulegen und in beliebig kleinen Abständen anzuordnen.

In einer weiteren, ebenfalls bevorzugten Ausführungsform der Erfindung ist die Auswerteeinheit dazu eingerichtet, durch Streuung an Bragg-Gittern entstehende optische Signale auszuwerten. Bragg-Gitter sind diskrete, ortsfeste Messstellen. Die Auswertung der dort entstehenden optischen Signale ist relativ einfach und erfordert daher auch nur eine relativ geringe Rechenleistung.

Dabei befinden sich vorteilhafterweise in dem Schutzrohr mindestens zwei Lichtwellenleiter mit jeweils einer axial verlaufenden Reihe von Bragg-Gittern, wobei die Bragg-Gitter der Reihen zueinander axial versetzt sind, und weisen in zumindest dem einen axialen Thermorohrabschnitt vorgegebener Länge die durch die Bragg-Gitter gebildeten, zueinander versetzten Messstellen den besagten Abstand benachbarter Messstellen auf, und verfügt die Auswerteeinheit über eine Einrichtung, welche die von den mindestens zwei Lichtwellenleitern reflektierten optischen Signale zu einer einzigen fortlaufenden Reihe von Temperaturmesswerten zusammensetzt. Mit dieser Maßnahme können Lichtwellenleiter mit jeweils einer Reihe von Bragg-Gittern eingesetzt werden, die zum benachbarten Bragg-Gitter derselben Reihe einen größeren Abstand aufweisen als erforderlich bzw. gewünscht. Insbesondere können mit dieser Maßnahme auch Abstände zwischen benachbarten Bragg-Gittern realisiert werden, die kleiner sind als die Mindestabstände zwischen benachbarten Bragg-Gittern derselben Reihe.

Der Vorteil bei der Auswertung der Bragg-Gitter-Rückstreuung liegt darin, dass bei einer Temperaturänderung lediglich die Wellenlänge des entsprechenden Bragg-Gittern verschoben wird. Die Auswertung dieses Signals ist relativ einfach und daher sehr schnell, was zu einer Auswertegeschwindigkeit quasi in Echtzeit führt. Durch den axialen Versatz werden so viele Bragg-Gitter in den Abstand bzw. die "Lücke" zwischen zwei Bragg-Gittern eines ersten Lichtwellenleiters gesetzt, dass die dort fehlenden Messwerte von dem mindestens einen parallelen weiteren Lichtwellenleiter abgedeckt werden. Je nach den Abständen zwischen benachbarten Bragg-Gittern eines Lichtwellenleiters, der Länge eines Bragg-Gitters und gewünschter resultierender Auflösung reichen einige wenige parallele Lichtwellenleiter aus, um eine Auflösung zu erhalten, die vergleichbar ist mit einer Auswertung z.B. der Raman-Streuung.

In einer bevorzugten Ausführungsform werden die verschiedenen Lichtwellenleiter mit den versetzten Bragg-Gittern in einer Auswerteeinheit mit Multiplexer zu einem zusammengesetzten kontinuierlichen Temperaturprofil zusammengesetzt.

Vorteilhafterweise ist jeder Lichtwellenleiter dehnungsentlastet. Hierdurch wird die Auswertung der reflektierten optischen Signale erheblich vereinfacht, da sämtliche Änderungen nur auf Temperaturänderungen beruhen.

Da Lichtwellenleiter in der Regel empfindlich gegen Temperaturänderungen und Dehnungsänderungen sind, hier jedoch nur die Temperaturen gemessen werden sollen, werden die Lichtwellenleiter dehnungsentlastet. Im einfachsten Fall geschieht dies dadurch, dass ein ausreichendes Spiel zwischen Lichtwellenleiter und Kapillarrohr vorhanden ist. Wenn die Thermorohre senkrecht aufgestellt sind - wie dies vorzugsweise der Fall ist -, kann sich der Lichtwellenleiter frei im Kapillarrohr bewegen und wird frei von Dehnungen in Folge von mechanischen Kräften gehalten.

Bei Lichtwellenleitern mit Bragg-Gittern können weiterhin die Bragg-Gitter als separate Sensoren axial beabstandet an dem Lichtwellenleiter befestigt werden, z.B. durch eine Spleißverbindung. Diese Verbindungsart ist bei Lichtwellenleitern eine übliche Verbindungstechnik. Im Speziellen werden kleine Lichtwellenleiter-Abschnitte mit Bragg-Gitter durch lokales Verschmelzen an der Hauptfaser befestigt. Auf diese Weise werden die Bragg-Gitter voneinander entkoppelt. Lokale Dehnungen wirken nur auf die Lichtwellenleiter-Hauptfaser, die keinen Beitrag zur Temperaturermittlung liefert. Die Dehnungsentkopplung kann noch weiter verbessert werden, indem die Bragg-Gitter jeweils von einem Stück Glaskapillare umhüllt werden. Eine weitere Möglichkeit der Dehnungsentlastung ist die Verminderung der Reibung durch Einbetten der Lichtwellenleiter zusammen mit einer Gewebelage in das Kapillarrohr.

In günstiger Weiterentwicklung der Erfindung verfügt die Auswerteeinheit über eine Einrichtung, welche Fremdsignale aus dem ausgewerteten Temperaturprofil entfernt.

Die optischen Signale eines Lichtwellenleiters können im Betrieb von Erschütterungen gestört werden, die planmäßig oder unplanmäßig auftreten. Dies können beispielsweise die Vibrationen von Umwälzpumpen für den Wärmeträger oder von anderen Maschinen in unmittelbarer Nähe des Reaktors sein. Die Auswerteeinheit ist vorzugsweise dafür eingerichtet, solche Störsignale auszufiltern.

In einer vorteilhaften Ausführungsform der Erfindung enthält der Rohrreaktor zusätzlich ein Wärmeträger-Thermorohr, welches frei von Katalysatormaterial ist und an seinen Enden gegen den Eintritt von Reaktionsgas bzw. Produktgas verschlossen ist und in welches sich mindestens ein temperaturempfindlicher, von einem Kapillarrohr umschlossener Lichtwellenleiter oder ein Thermometer mit einem anderen Messprinzip hineinerstreckt, der bzw. das an die Quelle für optische Signale sowie an die Auswerteeinheit anschließbar ist, wobei das Kapillarrohr thermisch leitend mit der Wärmeträger-Thermorohrwand verbunden ist.

Ein Wärmeträger-Thermorohr erlaubt die Messung der axialen Temperatur des Wärmeträgers. Durch die Verwendung mehrerer solcher Wärmeträger-Thermorohre an verschiedenen radialen Positionen im Rohrbündel erhält man eine Aussage über den radialen Temperaturgradienten des Wärmeträgers über den Reaktorquerschnitt.

Ein thermischer Kontakt zur Wärmeträger-Thermorohrwand kann auf unterschiedliche Art und Weisen erfolgen. Eine Möglichkeit ist die Anordnung des Kapillarrohrs auf der Rohrachse und Einfüllen von thermisch leitendem Inertmaterial in den Ringraum zwischen Außenwand des Kapillarrohrs und Innenwand des Wärmeträger-Thermorohrs. Eine andere Art ist die Befestigung des Kapillarrohrs direkt an der Innenwand des Wärmeträger-Thermorohrs. Die Positionierung wird in beiden Fällen durch geeignete Abstandshalter gewährleistet. Diese können ggf. auch Federelemente enthalten, deren Werkstoffe bevorzugt temperaturstabil sind.

Die Temperaturmessung mittels Lichtwellenleiter kann kombiniert werden mit einer Temperaturmessung nach dem Stand der Technik als zusätzliches oder in Teilen redundantes Messsystem.

Zur Kontrolle der absoluten Temperatur kann z. B. zusätzlich zum Lichtwellenleiter parallel neben diesem ein Stufen-Thermoelement in dem Wärmeträger-Thermorohr angeordnet sein.

In einer Weiterbildung der Erfindung verfügen die Thermorohre an mindestens einem ihrer beiden Enden über Erhebungen, mit welchen sie schnell von den umgebenden Reaktionsrohren unterschieden werden können. Diese Erhebungen bestehen vorzugsweise aus Verlängerungen der Thermorohre, die dann kragenförmig aus dem Rohrboden hervorstehen. Diese Verlängerungen haben bevorzugt die gleichen Innen- und Außendurchmesser wie die Thermorohre und werden vorzugsweise bündig an diese angeschweißt. Die Höhe der Erhebungen liegt in einem Bereich zwischen 4 und 25 mm und bevorzugt zwischen 8 und 15 mm.

Thermorohre zur Messung der Wärmeträgertemperatur sind beispielsweise an ihren unteren Enden verschlossen. Als Verschlusselement wird vorzugsweise ein mit einem Sackloch versehener Stopfen aus Metall in das Thermorohr eingeschweißt. Der Stopfen wird vorzugsweise so aufgebohrt, dass im Bereich des Sacklochs eine Stopfenwandstärke übrig bleibt, welche der Nennwandstärke des Thermorohres entspricht mit einer Toleranz von -20% bis +60%. Durch die dünne Stopfenwand wird die Schweißbarkeit erleichtert und Spannungen vermieden. Die Tiefe des Sacklochs liegt in einem Bereich zwischen 4 und 10 mm, bevorzugt zwischen 5 - 8 mm. Ein Verschlussstopfen dieser Art kann auch zum Verschließen von defekten Reaktionsrohren verwendet werden.

Ein solches mit einem Stopfen versehenes Ende eines Thermorohres ist leicht von den umgebenden Reaktionsrohren zu unterscheiden. Auf die Verwendung einer Erhebung zur besseren Unterscheidung kann daher hier verzichtet werden.

Die Erhebungen können auch anders als Rohrstücke ausgeführt sein, beispielsweise als Stege außerhalb des Thermorohrquerschnitts, welche jedoch eindeutig die Lage des Thermorohrs anzeigen. Hierzu können die Stege beispielsweise Pfeilform oder Dreiecksform besitzen, die bevorzugt nur an den Querschnitt der entsprechenden Thermorohre angrenzen.

Die Erhebungen können gleichfalls als negative Erhebungen ausgeführt sein, indem z.B. Markierungen wie Pfeile in den Rohrboden eingestanzt werden. Solche negative Erhebungen sind jedoch schlechter erkennbar als die vorgenannten positiven Erhebungen.

In einer weiteren Ausgestaltung der Erfindung können weiterhin die Erhebungen der Thermorohre zur Messung der Katalysatortemperatur verschieden von denen der Thermorohre zur Messung der Wärmeträgertemperatur sein, beispielsweise durch Kerben, Bohrungen, Ausstülpungen oder durch angesetzte Elemente.

Die Erfindung wird nachfolgend anhand der Zeichnungen beispielshalber noch näher erläutert. Es zeigen:
Figur 1 in einer schematischen Darstellung einen Vertikalschnitt durch eine Ausführungsform eines erfindungsgemäßen Rohrreaktors, mit vergrößerter Darstellung eines Thermorohrs;
die Figuren 2 bis 4 verschiedene Ausführungsformen von Katalysatorpartikeln, mit den jeweils maßgebenden Außenabmessungen für die Kantenlängen eines das jeweilige Katalysatorpartikel begrenzenden Quaders;
Figur 5 eine Tabelle mit den Ergebnissen eines Siebvorgangs in einem Siebturm;
Figur 6 ein Diagramm, in dem die Ergebnisse aus Figur 5 als Histogramm und als Summenverteilungskurve dargestellt sind;
Figur 7a einen Teil-Längsschnitt durch ein Kapillarrohr für eine weitere Ausführungsform eines erfindungsgemäßen Rohrreaktors, wobei in dem Kapillarrohr drei Lichtwellenleiter mit Bragg-Gittern angeordnet sind;
Figur 7b einen Querschnitt längs Linie VIIb - Vllb in Figur 7a;
Figur 8 ein Diagramm mit dem Temperaturprofil der Messstellen der Figuren 7a und 7b;
Figur 9 einen Querschnitt durch eine erste Ausführungsform eines Wärmeträger-Thermorohrs für einen erfindungsgemäßen Rohrreaktor; und
Figur 10 einen Querschnitt durch eine zweite Ausführungsform eines Wärmeträger-Thermorohrs für einen erfindungsgemäßen Rohrreaktor.

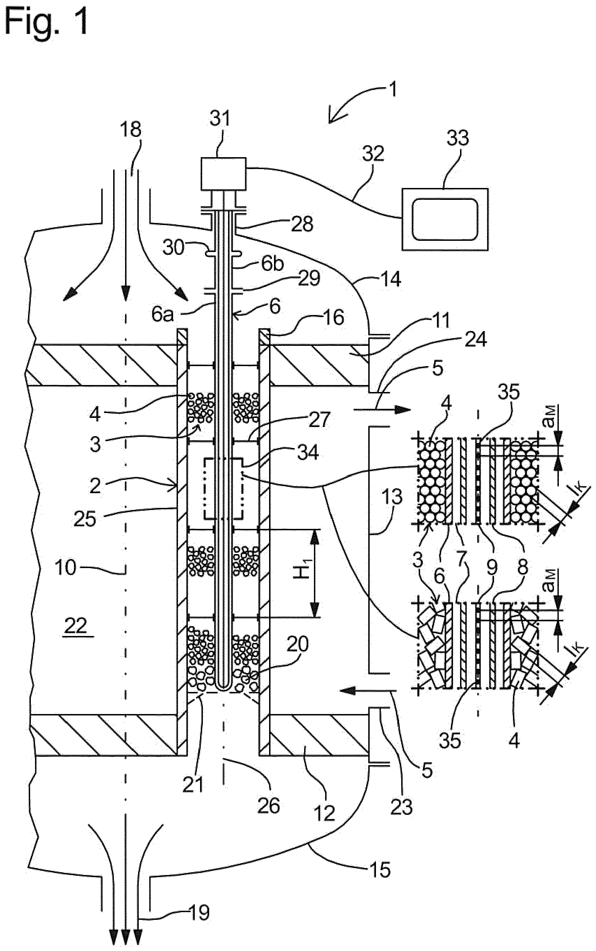

Das in Figur 1 dargestellte Ausführungsbeispiel eines erfindungsgemäßen Rohrreaktors 1 weist mindestens ein Thermorohr 2 auf. Das Thermorohr 2 ist mit einer Katalysatorschüttung 3 gefüllt, die aus Partikeln 4 besteht. Im Betrieb wird das Thermorohr 2 von einem fluiden Wärmeträger 5 umströmt. In die Katalysatorschüttung 3 hinein erstreckt sich ein Schutzrohr 6, in dessen Innenraum 7 ein von einem Kapillarrohr 8 umschlossener Lichtwellenleiter 9 verläuft.

Der in Figur 1 dargestellte Rohrreaktor 1 ist ein Rohrbündelreaktor. Ein Bündel vertikal verlaufender katalysatorgefüllter (nicht dargestellter) Reaktionsrohre ist kreisförmig oder kreisringförmig um die Längsachse 10 des Rohrbündelreaktors 1 herum angeordnet. Aus Gründen der Übersichtlichkeit sind in Figur 1 die Reaktionsrohre nicht dargestellt, sondern ausschließlich ein Thermorohr 2. Um die Details im Innenraum 7 des Thermorohrs 2 klar und eindeutig darstellen zu können, ist das Thermorohr 2 mit einem übergroßen Durchmesser nicht maßstabsgerecht dargestellt.

Sämtliche Reaktionsrohre und Thermorohre 2 sind mit ihren Enden in einem oberen bzw. unteren Rohrboden 11, 12 abdichtend befestigt. Ein Reaktormantel 13 umschließt das Rohrbündel und ist ebenfalls mit den beiden Rohrböden 11, 12 dicht verbunden. Der obere Rohrboden 11 wird von einer oberen Reaktorhaube 14 und der untere Rohrboden 12 von einer unteren Reaktorhaube 15 überspannt. Jedes Reaktionsrohr und jedes Thermorohr 2 mündet mit seinen Enden in die obere und in die untere Reaktorhaube 14, 15.

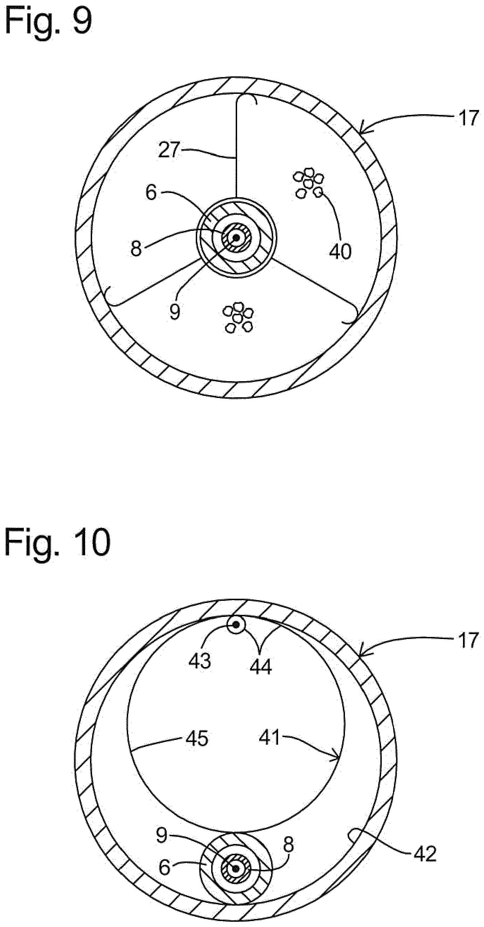

In dem dargestellten Ausführungsbeispiel weist das Thermorohr 2 an seinem oberen Ende eine Erhebung 16 auf, um es besser von Reaktionsrohren unterscheiden zu können. Zudem können die Erhebungen von Thermorohren 2, mit denen die Katalysatortemperatur gemessen wird, anders ausgebildet sein als Erhebungen von Wärmeträger-Thermorohren 17 (Figuren 9 und 10), um sie voneinander unterscheiden zu können.

Das Reaktionsgasgemisch 18 wird jedem Reaktionsrohr und jedem Thermorohr 2 über eine, im dargestellten Ausführungsbeispiel über die obere, Reaktorhaube 14 zugeleitet und aus diesen Rohren über die andere, im dargestellten Fall untere Reaktorhaube 15 als Produktgasgemisch 19 wieder abgeleitet. Die Reaktionsrohre und die Thermorohre 2 können außer Katalysatormaterial 3 gegebenenfalls auch Inertmaterial 20 enthalten, um die Reaktion zu steuern. Im unteren Endbereich des Thermorohrs 2 und jedes Reaktionsrohrs ist ein sogenannter Katalysatorhalter 21 befestigt, der die Katalysator/Inertschüttung 3, 20 trägt.

Die beiden Rohrböden 11, 12 und der Reaktormantel 13 begrenzen einen Wärmeträgerraum 22, in den über eine Zuleitung 23 ein fluider Wärmeträger 5 zugeleitet und aus dem über eine Ableitung 24 der Wärmeträger 5 wieder abgeleitet wird und in dem die Reaktionsrohre und die Thermorohre 2 an ihren Außenseiten 25 von dem fluiden Wärmeträger 5 umspült werden.

Der dargestellte Rohrreaktor 1 weist nur einen Wärmeträger-Kreislauf auf. Die Anzahl unabhängiger Wärmeträger-Kreisläufe oder Wärmeträgerzonen ist jedoch bei einem erfindungsgemäßen Rohrreaktor nicht beschränkt.

Das Schutzrohr 6 ist im dargestellten Ausführungsbeispiel auf der Rohrachse 26 des Thermorohrs 2 angeordnet und erstreckt sich durch die gesamte Katalysatorschüttung 3 hindurch bis zum stromabwärtigen Ende der Katalysatorschüttung 3. Es wird durch Abstandshalter 27 in der Mitte des Thermorohrs 2 zentriert. Die Abstandshalter 27 erstrecken sich zwischen der Innenwand des Thermorohrs 2 und der Außenwand des Schutzrohrs 6 und sind in Längsrichtung des Thermorohrs 2 in geeigneten axialen Abständen H₁ angeordnet, bevorzugt in einem axialen Abstand angeordnet, der das 10- bis 30-fache des Innendurchmessers des Thermorohrs 2 beträgt.

Das Schutzrohr 6 erstreckt sich durch die obere Reaktorhaube 14 hindurch. Diese weist einen Temperaturmessstutzen 28 auf, durch den hindurch das Schutzrohr 6 aus der Reaktorhaube 14 herausgeführt wird und an dem das obere Ende des Schutzrohrs 6 befestigt ist.

Das Schutzrohr 6 ist zweigeteilt. Die Verbindung der beiden Schutzrohrteile 6a, 6b erfolgt mit Flanschen 29, die eine beliebige lösbare Verbindung sein können, z. B. eine Klemmring- oder Schneidringverbindung. Um Längenänderungen des Schutzrohrs 6 in Folge von Temperaturänderungen nicht zu behindern, ist die Verbindung der beiden Schutzrohrteile 6a, 6b ist axial beweglich.

Das Schutzrohr 6 weist auch einen Kompensator 30 auf, der Längenänderungen des Schutzrohres 6 aufnehmen kann.

Die Verbindung der beiden Schutzrohrteile 6a, 6b und der Kompensator 30 sind beide im dargestellten Ausführungsbeispiel in der oberen Reaktorhaube 14 angeordnet.

Das Hindurch- und das Herausführen von Signalkabeln sowie der umgebenden Kapillarrohre 8 bzw. Schutzrohre 6 durch die bzw. aus der Reaktorhaube 14 kann in ähnlicher Weise erfolgen wie in der EP 2 075 058 B1 beschrieben mit Stopfbuchsdichtungen, Kompensatoren und Ähnlichem.

In dem Schutzrohr 6 hängt frei ein Kapillarrohr 8, in dem sich ein Lichtwellenleiter 9 befindet und ebenfalls frei bewegen kann. Sowohl das Kapillarrohr 8 als auch der Lichtwellenleiter 9 sind somit dehnungsentlastet.

Der Lichtwellenleiter 9 erstreckt sich über die gesamte Länge des Kapillarrohrs 8 und mündet außerhalb des Reaktors 1 in eine Lichtwellenleiter-Kupplung 31, die im dargestellten Ausführungsbeispiel auf dem Temperaturmessstutzen 28 angeflanscht ist.

Die Lichtwellenleiter-Kupplung 31 kann aber auch vom Reaktor 1 getrennt neben diesem aufgestellt sein, um eine Übertragung von Reaktorschwingungen auf die Lichtwellenleiter-Kupplung 31 zu vermeiden.

Die Signalübertragung der erfindungsgemäßen Vorrichtung ist nicht an ein bestimmtes Konzept gebunden. So können die optischen Signale vor Ort mit einer in die Lichtwellenleiter-Kupplung 31 integrierten Auswerteeinheit ausgewertet werden und ggf. über eine Leitung 32 an ein Prozessleitsystem 33 weitergeleitet werden. Dies kann kabelgebunden oder per Funkübertragung geschehen. Die optischen Signale können ebenso gut mit einem reinen Transport- Lichtwellenleiter an eine räumlich entfernte Auswerteeinrichtung transportiert und dort ausgewertet werden. Die Temperaturmessung und Auswertung wird vorzugsweise automatisch von einem Programm ausgeführt werden.

In Figur 1 ist ein Ausschnitt aus dem Thermorohr 2 in vergrößertem Maßstab in zwei Varianten mit unterschiedlich geformten Katalysatorpartikeln 4 dargestellt. Der Ausschnitt gehört zu dem axialen Thermorohrabschnitt 34, in dem das Auftreten der maximalen Reaktionstemperatur im Thermorohr 2 - d. h. das Auftreten des Hot Spots - erwartet wird..

In der in Figur 1 oberen Variante sind die Katalysatorpartikel 4 kugelförmig, wie in Figur 2 dargestellt. In der unteren Variante sind die Katalysatorpartikel 4 hohlzylinderförmig, wie in Figur 3 dargestellt. Der Lichtwellenleiter 9 weist eine Reihe von Messstellen 35 auf. Der Abstand a_{M} benachbarter Messstellen 35 in Axialrichtung des Thermorohrs 2 in diesem Thermorohrabschnitt 34 ist in Abhängigkeit von der Größe der Katalysatorpartikel 4 in diesem Thermorohrabschnitt 34 festgelegt.

Katalysatorpartikel 4 können unterschiedlich geformt sein. In den Figuren 2 bis 4 sind beispielhaft verschieden geformte Katalysatorpartikel 4 wiedergegeben. Vorzugsweise besteht eine Katalysatorschüttung 3 aus gleich geformten Katalysatorpartikeln 4.

Unabhängig von der Form der Katalysatorpartikel 4 liegt die Größe des Abstandes a_{M} benachbarter Messstellen 35 auf dem Lichtwellenleiter 9 im Bereich vom 0,8- bis zum 5-fachen der kürzesten Kantenlänge l_{K} aller gedachter Quader, die mit minimalem Volumen Partikel 4 begrenzen, die vorgegebene Bedingungen erfüllen:
Wenn die Nenn-Außenabmessungen des Katalysatorpartikels 4 bekannt sind, beispielsweise
- im Fall von kugelförmigen Partikeln 4 (Figur 2) der Außendurchmesser D_{K},
- im Fall von zylinder- oder hohlzylinderförmigen Partikeln 4 (Figur 3) der (Hohl)Zylinderaußendurchmesser D_{Z} und die (Hohl)Zylinderlänge L_{Z} und
- im Fall von Berl-Sattelkörpern (Figur 4) die Länge L_{B}, die Breite B_{B}, die Höhe H_{B} (Figur 4),
   ist die kürzeste Kantenlänge l_{K} aller gedachter Quader maßgebend, die mit minimalem Volumen jeweils ein Partikel unter der Annahme begrenzen, dass das Partikel 4 seine Nenn-Außenabmessungen aufweist. Das bedeutet in den vorgenannten Beispielen,
- im Fall von kugelförmigen Partikeln ist die besagte kürzeste Kantenlänge l_{K} der Nenn-Außendurchmesser D_{K} der Partikel 4, wobei im Fall von Partikeln 4 mit unterschiedlichen Nenn-Außendurchmessern D_{K} in der Katalysatorschüttung 3 der kleinste Nenn-Außendurchmesser D_{K} die besagte kürzeste Kantenlänge l_{K} ist,
- im Fall von (hohl)zylinderförmigen Partikeln 4 ist die besagte kürzeste Kantenlänge l_{K} die kleinste der Nenn-Außenabmessungen Durchmesser D_{Z} oder Zylinderlänge L_{Z}, wobei im Fall von (Hohl)Zylindern mit unterschiedlichen Nenn-Außenabmessungen in der Katalysatorschüttung 3 die absolut kleinste der Nenn-Außenabmessungen D_{Z}, L_{Z} die besagte kürzeste Kantenlänge l_{K} ist,
- im Fall von Berl-Sattelkörpern ist die besagte kürzeste Kantenlänge l_{K} die kleinste der Nenn-Außenabmessungen Länge L_{B}, Breite B_{B}, Höhe H_{B}, wobei auch hier im Fall von Berl-Sattelklörpern mit unterschiedlichen Nenn-Außenabmessungen in einer Katalysatorschüttung 3 die absolut kleinste der Nenn-Außenabmessungen L_{B}, B_{B}, H_{B} die besagte kürzeste Kantenlänge l_{K} ist.

Wenn in einer Katalysatorschüttung 3 im Fall von bekannten Nenn-Außenabmessungen unterschiedlich geformte Katalysatorpartikel 4 gemischt sind, ist die besagte kürzeste Kantenlänge l_{K} die absolut kürzeste Kantenlänge aller gedachter Quader, die jeweils eines der unterschiedlich geformten Partikel 4 unter der Annahme begrenzen, dass es seine Nenn-Außenabmessungen aufweist.

In den oben beschriebenen Beispielen ist bei einer Katalysatorschüttung 3, die aus mindestens zwei Formen der in den Figuren 2 bis 4 dargestellten Katalysatorpartikeln 4 gemischt ist, die besagte kürzeste Kantenlänge l_{K} die absolut kleinste der oben angegebenen Nenn-Außenabmessungen D_{K}, D_{Z}, L_{Z}, L_{B}, B_{B} oder H_{B}.

Im in Figur 1 dargestellten Ausführungsbeispiel beträgt der Abstand a_{M} benachbarter Messstellen 35 das 1-fache der besagten kürzesten Kantenlänge l_{K}.

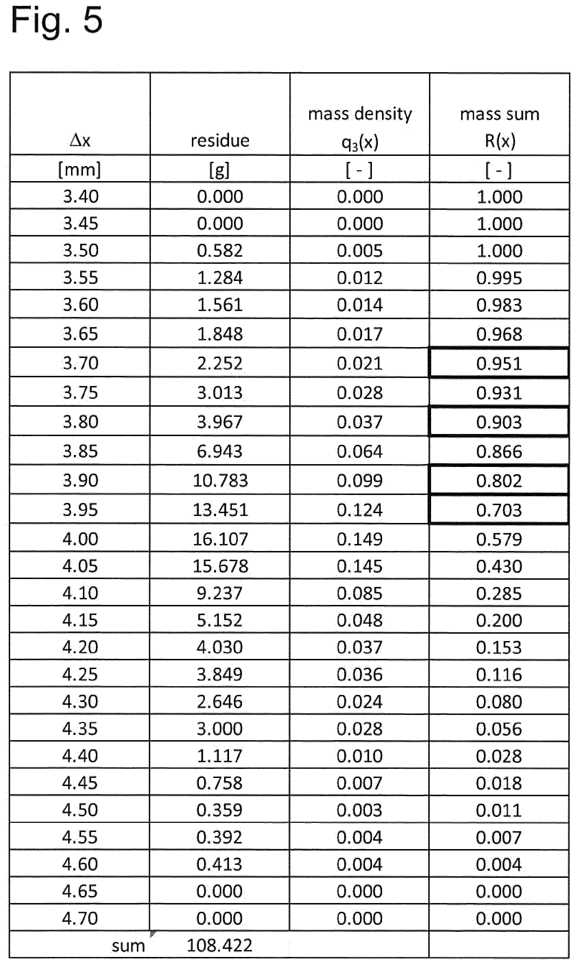

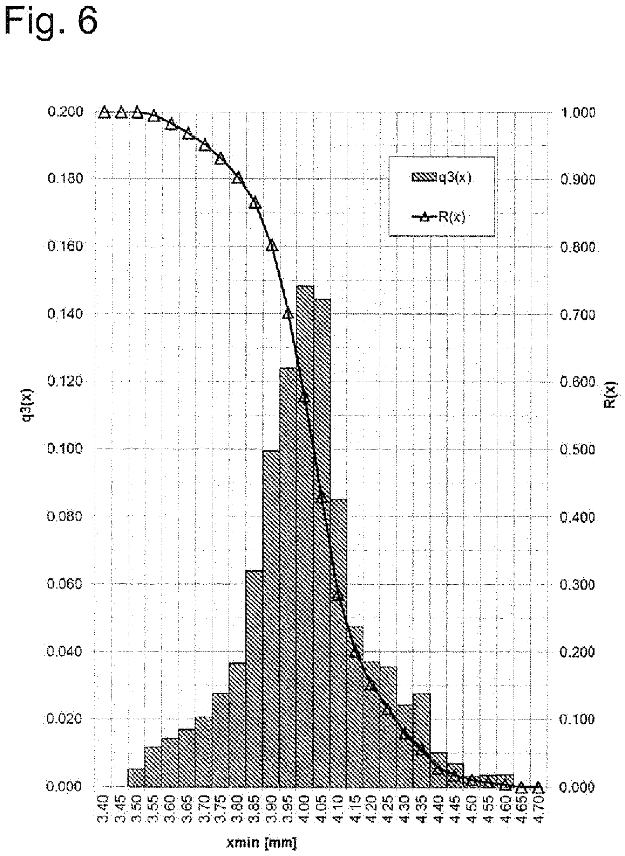

Wenn die Nenn-Außenabmessungen der Katalysatorpartikel 4 nicht bekannt sind, beträgt der Abstand a_{M} benachbarter Messstellen das 0,8- bis 5-fache der kürzesten Kantenlänge l_{K} aller gedachten Quader, die mit minimalem Volumen jeweils diejenigen Partikel 4 begrenzen, die zu einem Massenanteil von minimal 70 % der Katalysatorschüttung 3 gehören, zu dem sämtliche Partikel 4 mit gedachten Quadern gehören, bei denen jede Kantenlänge länger ist als die kürzeste Kantenlänge l_{K}. Als Beispiel sei eine ideal vermischte Katalysatorschüttung 3 angenommen, aus der eine repräsentative Stichprobe entnommen wurde. Diese Stichprobe wird in einem Siebturm mit einer Laborsiebmaschine trocken klassiert. Der Siebturm besteht aus einer Vielzahl von Spaltsieben mit Spaltweiten zwischen 3,4 mm und 4,6 mm mit einem Abstand der Spaltweiten von 0,05 mm. Das Siebgut - die Stichprobe - wird dabei auf das oberste Spaltsieb mit der größten Spaltweite aufgegeben. Die kürzeste Kantenlänge des Quaders, der mit minimalem Volumen ein Katalysatorpartikel 4 begrenzt, ist bestimmend dafür, ob das Partikel 4 durch die Schlitze bzw. Spalte fällt oder darauf liegen bleibt. In Fig. 5 ist das Ergebnis der Siebung tabellarisch und in Fig. 6 graphisch als Histogramm q3(x) und Summenverteilungskurve R(x) dargestellt.

Auf dem Sieb mit der Spaltweite 3,95 mm ist beispielsweise ein Massenanteil q3(x) von 0,124 zurückgehalten worden. Dieser Massenanteil q3(x) wird auch als Massendichte (mass density) bezeichnet. Dieser Rückstand beinhaltet alle Katalysatorpartikel 4, deren maßgebende Außenabmessung (kürzeste Kantenlänge) größer ist als 3,95 mm und höchstens 4,00 mm (nächstgrößere Siebspaltweite) beträgt. Zusammen mit allen Massenanteilen der größeren Siebklassen ergibt sich ein aufsummierter Massenanteil R(x) oder auch eine Massensumme (mass sum) von 0,703 entsprechend 70,3 %. Alle anderen Katalysatorpartikel haben eine maßgebende Außenabmessung, die 3,95 mm oder kleiner ist, so dass bei dieser Korngrößenverteilung die Abmessung von 3,95 mm die besagte kürzeste Kantenlänge l_{K} für einen Massenanteil von 70,3 % bildet. Die Abmessung von 3,95 mm erfüllt somit das Kriterium für einen Massenanteil von minimal 70 % im Sinne dieser Erfindung. Entsprechend erfüllt die Abmessung von 3,90 mm mit einem Massenanteil von 80,2% das Kriterium für einen Massenanteil von minimal 80 %, die Abmessung von 3,80 mm mit einem Massenanteil von 90,3 % das Kriterium für einen Massenanteil von minimal 90 % und die Abmessung von 3,70 mm mit einem Massenanteil von 95,1 % das Kriterium für einen Massenanteil von minimal 95 %.

Sind die jeweils maßgebenden Außenabmessungen (kürzesten Kantenlängen) für Massensummen gewünscht, die nicht unmittelbar aus der Tabelle in Figur 5 ablesbar sind, so wird zwischen den Spaltweiten für die darüber und die darunter liegende Massensumme linear interpoliert.

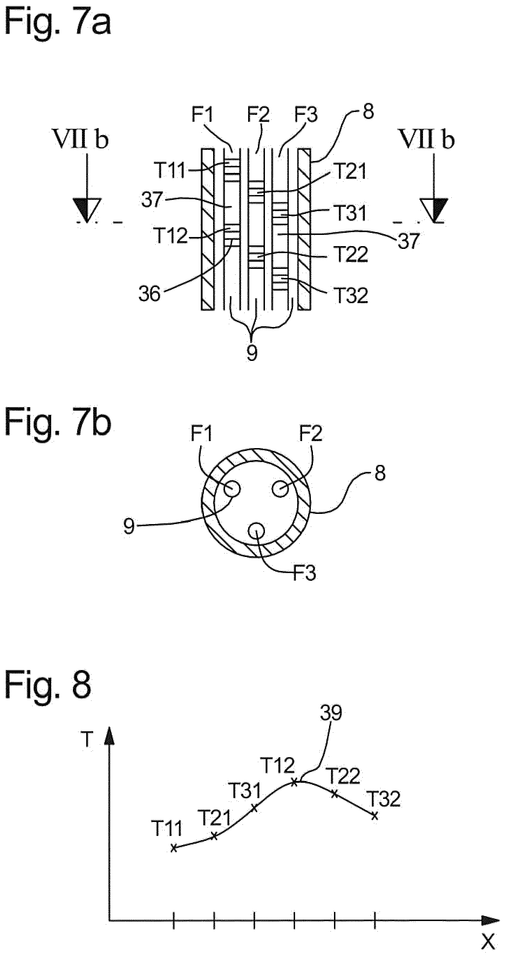

Die Figuren 7a und 7b zeigen drei Lichtwellenleiter 9 bzw. optische Fasern F₁, F₂, F₃, die mit Bragg-Gittern 36 versehen und gemeinsam in einem Kapillarrohr 8 angeordnet sind. Die Bragg-Gitter 36 bilden Messstellen 35 aus, die in Figur 7a einzeln als T₁₁, T₁₂, T₂₁, T₂₂, T₃₁, T₃₂ bezeichnet sind. Der Abstand zwischen den zwei für jeden Lichtwellenleiter 9 dargestellten Bragg-Gittern 36 ist bei allen drei Lichtwellenleitern 9 gleich. Die Lichtwellenleiter 9 sind jedoch in axialer Richtung zueinander versetzt, sodass auf der Höhe des Zwischenraums 37 zwischen zwei Bragg-Gittern 36 eines Lichtwellenleiters 9 jeweils ein Bragg-Gitter 36 der beiden anderen Lichtwellenleiter 9 liegt. Das heißt, zwischen zwei Messstellen 35 eines Lichtwellenleiters 9 liegen jeweils zwei weitere Messstellen 35, nämlich im dargestellten Ausführungsbeispiel je eine Messstelle 35 der beiden anderen Lichtwellenleiter 9. Der resultierende Messstellenabstand innerhalb des Kapillarrohrs 8 beträgt somit nur ein Drittel des Messstellenabstandes auf jedem Lichtwellenleiter 9.

Die Lichtwellenleiter 9 können zur Dehnungsentlastung in eine (nicht dargestellte) Gewebelage eingebettet sein.

Figur 8 zeigt ein Temperaturprofil der Messstellen T₁₁, T₁₂, T₂₁, T₂₂, T₃₁, T₃₂ aus Figur 7a. Das Temperaturprofil zeigt einen Hot Spot 39 in der Nähe der Messstelle T₁₂. Figur 8 zeigt das von einem Multiplexer aus den Messstellen 35 der drei Lichtwellenleiter 9 aus Figur 7a zusammengeführte Temperaturprofil.

Die Figuren 9 und 10 zeigen jeweils einen Querschnitt durch ein Wärmeträger-Thermorohr 17.

Bei der in Figur 9 dargestellten Ausführungsform erfolgt die Zentrierung des Schutzrohrs 6 durch einen dreiarmigen Abstandshalter 27. Das Wärmeträger-Thermorohr 17 ist mit einem gut wärmeleitenden Material 40 gefüllt, beispielsweise mit Aluminiumgries.

Bei der in Figur 10 dargestellten Ausführungsform wird das Schutzrohr 6 durch eine Federkonstruktion 41 an die Innenwand 42 des Wärmeträger-Thermorohrs 17 gedrückt. Hierdurch wird der Wärmeleitungsweg von der Innenwand 42 des Wärmeträger-Thermorohrs 2 zum Lichtwellenleiter 9 minimiert und so die Wärmeleitung zum Lichtwellenleiter 9 maximal beschleunigt. In dem dargestellten Ausführungsbeispiel besteht die Feder 41 aus einer um einen Führungsdraht 43 gewickelten Spiralfeder 44 mit einem radial großen Federteil 45.

## Patentansprüche

1. Rohrreaktor zur Durchführung von heterogen katalysierten Gasphasenreaktionen, mit einem Thermorohr, welches eine Katalysatorschüttung enthält und im Betrieb an seiner Außenseite von einem fluiden Wärmeträger umströmt wird, wobei die Katalysatorschüttung aus Partikeln besteht, und mit
einem temperaturempfindlichen Lichtwellenleiter, der von einem Kapillarrohr umschlossen ist, sich in die Katalysatorschüttung des Thermorohrs hineinerstreckt, Messstellen mit einem vorgegebenen Abstand zwischen benachbarten Messstellen in Axialrichtung des Thermorohrs aufweist und an eine Quelle für optische Signale sowie an eine Auswerteeinheit für vom Lichtwellenleiter reflektierte optische Signale anschließbar ist,
**dadurch gekennzeichnet,**
**dass** der Lichtwellenleiter (9) zumindest in einem axialen Thermorohrabschnitt (34) vorgegebener Länge, der zumindest einen Teil der Katalysatorschüttung (3) enthält, Messstellen (35) mit einem Abstand (a_{M}) zwischen benachbarten Messstellen (35) in Axialrichtung des Thermorohrs (2) aufweist, der das 0,8- bis 5-fache der kürzesten Kantenlänge (l_{K}) aller gedachten Quader beträgt, die mit minimalem Volumen
in den Fällen, in denen den Partikeln (4) der Katalysatorschüttung (3) Nenn-Außenabmessungen zugeordnet sind, jeweils ein Partikel (4) unter der Annahme begrenzen, dass das Partikel (4) seine Nenn-Außenabmessung aufweist, und
in allen anderen Fällen jeweils diejenigen Partikel (4) begrenzen, die zu einem Massenanteil von minimal 70 % der Katalysatorschüttung (3) gehören, zu dem sämtliche Partikel (4) mit gedachten Quadern gehören, bei denen jede Kantenlänge länger ist als die kürzeste Kantenlänge (lₖ).

2. Rohrreaktor nach Anspruch 1, **dadurch gekennzeichnet, dass** in der Katalysatorschüttung (3) des Thermorohrs (2) ein Schutzrohr (6) angeordnet ist und der Lichtwellenleiter (9) mit Kapillarrohr (8) in dem Schutzrohr (6) verläuft.

3. Rohrreaktor nach Anspruch 1 oder 2, **dadurch gekennzeichnet, dass** der Massenanteil minimal 80%, bevorzugt minimal 90% und besonders bevorzugt minimal 95% beträgt.

4. Rohrreaktor nach einem der vorangegangenen Ansprüche, **dadurch gekennzeichnet, dass** in dem axialen Thermorohrabschnitt (34) vorgegebener Länge der Abstand (a_{M}) benachbarter Messstellen (35) in Axialrichtung des Thermorohrs (2) das 1- bis 3-fache und bevorzugt das 1-bis 2-fache der besagten kürzesten Kantenlänge (l_{K}) beträgt.

5. Rohrreaktor nach einem der vorangegangenen Ansprüche, **dadurch gekennzeichnet, dass** in dem axialen Thermorohrabschnitt (34) vorgegebener Länge der Abstand (a_{M}) benachbarter Messstellen (35) in Axialrichtung des Thermorohrs (2) mindestens 0,5 mm beträgt.

6. Rohrreaktor nach einem der vorangehenden Ansprüche, **dadurch gekennzeichnet, dass** er zusätzlich mindestens ein katalysatorgefülltes Reaktionsrohr enthält.

7. Rohrreaktor nach einem der vorangehenden Ansprüche, **dadurch gekennzeichnet, dass** der Lichtwellenleiter (9), das Kapillarrohr (8) und das Schutzrohr (6) temperaturbeständig bis 1000 °C, bevorzugt bis 800 °C und besonders bevorzugt bis 700 °C temperaturbeständig sind.

8. Rohrreaktor nach einem der vorangehenden Ansprüche, **dadurch gekennzeichnet, dass** die Auswerteeinheit (31) dazu eingerichtet ist, durch Raman-Streuung und/oder durch Rayleigh-Streuung und/oder durch Brillouin-Streuung entstehende optische Signale auszuwerten.

9. Rohrreaktor nach den Ansprüchen 1 bis 7, **dadurch gekennzeichnet, dass** die Auswerteeinheit (31) dazu eingerichtet ist, durch Streuung an Bragg-Gittern entstehende optische Signale auszuwerten.

10. Rohrreaktor nach Anspruch 9, **dadurch gekennzeichnet, dass** sich in dem Schutzrohr (6) mindestens zwei Lichtwellenleiter (9) mit jeweils einer axial verlaufenden Reihe von Bragg-Gittern (36) befinden, wobei die Bragg-Gitter (36) der Reihen zueinander axial versetzt sind, und in zumindest dem einen axialen Thermorohrabschnitt (34) vorgegebener Länge die durch die Bragg-Gitter (36) gebildeten, zueinander versetzten Messstellen (35) den besagten Abstand (a_{M}) benachbarter Messstellen (35) aufweisen, und dass die Auswerteeinheit (31) über eine Einrichtung verfügt, welche die von den mindestens zwei Lichtwellenleitern (9) reflektierten optischen Signale zu einer einzigen fortlaufenden Reihe von Temperaturmesswerten zusammensetzt.

11. Rohrreaktor nach einem der vorangehenden Ansprüche, **dadurch gekennzeichnet, dass** jeder Lichtwellenleiter (9) dehnungsentlastet ist.

12. Rohrreaktor nach einem der vorangehenden Ansprüche, **dadurch gekennzeichnet, dass** die Auswerteeinheit (33) über eine Einrichtung verfügt, welche Fremdsignale aus dem ausgewerteten Temperaturprofil entfernt.

13. Rohrreaktor nach einem der vorangehenden Ansprüche, **dadurch gekennzeichnet, dass** er zusätzlich ein Wärmeträger-Thermorohr (17) enthält, welches frei von Katalysatormaterial ist und an seinen Enden gegen den Eintritt von Reaktionsgas (18) bzw. Produktgas (19) verschlossen ist und in welches sich mindestens ein temperaturempfindlicher, von einem Kapillarrohr (8) umschlossener Lichtwellenleiter (9) oder ein Thermometer mit einem anderen Messprinzip hineinerstreckt, der bzw. das an die Quelle für optische Signale sowie an die Auswerteeinheit (31) anschließbar ist, wobei das Kapillarrohr (8) thermisch leitend mit der Wärmeträger-Thermorohrwand (42) verbunden ist.

14. Rohrreaktor nach einem der vorangehenden Ansprüche, **dadurch gekennzeichnet, dass** die Thermorohre (2) an mindestens einem ihrer beiden Enden eine Erhebung (16) besitzen.

15. Rohrreaktor nach Anspruch 14, **dadurch gekennzeichnet, dass** die Erhebungen (16) der Thermorohre (2) zur Messung der Katalysatortemperatur verschieden sind von denen der Thermorohre (17) zur Messung der Wärmeträgertemperatur.

## Claims

1. A tube reactor for carrying out heterogeneously catalysed gas phase reactions, having a thermal tube, which contains a catalyst filling and during the operation is circulated on its outside by a fluid flow of heat transfer medium, wherein the catalyst filling consists of particles, and having
a temperature-sensitive optical wave guide that is enclosed by a capillary tube, extends into the catalyst filling of the thermal tube, comprises measuring points with a predetermined distance between adjacent measuring points in the axial direction of the thermal tube and is connectable to a source for optical signals and to an evaluation unit for optical signals reflected by the optical wave guide, **characterized**
**in that** the optical wave guide (9) in an axial thermal tube section (34) of predetermined length, which contains at least one part of the catalyst filling (3), comprises measuring points (35) with a distance (a_{M}) between neighbouring measuring points (35) in the axial direction of the thermal tube (2), which amounts to 0.8 to 5 times the shortest edge length (l_{K}) of all imagined cuboids, which with minimal volume, in the cases in which the particles (4) of the catalyst filling (3) are assigned nominal outer dimensions, in each case delimit a particle (4) under the assumption that the particle (4) has its nominal outer dimension, and in all other cases delimit in each case those particles (4), which belong to a mass percentage of minimally 70% of the catalyst filling (3), to which all particles (4) with imagined cuboids belong, in the case of which each edge length is longer than the shortest edge length (l_{K}).

2. The tube reactor according to Claim 1, **characterized in that** in the catalyst filling (3) of the thermal tube (2) a protective tube (6) is arranged and the optical wave guide (9) with capillary tube (8) runs in the protective tube (6).

3. The tube reactor according to Claim 1 or 2, **characterized in that** the mass percentage amounts to minimally 80%, preferably minimally 90% and particularly preferably minimally 95%.

4. The tube reactor according to any one of the preceding claims, **characterized in that** in the axial thermal tube section (34) of predetermined length the distance (a_{M}) of neighbouring measuring points (35) in the axial direction of the thermal tube (2) amounts to 1 to 3-times and preferably 1 to 2-times of the said shortest edge length (l_{K}).

5. The tube reactor according to any one of the preceding claims, **characterized in that** in the axial thermal tube section (34) of predetermined length the distance (a_{M}) of neighbouring measuring points (35) in the axial direction of the thermal tube (2) amounts to at least 0.5 mm.

6. The tube reactor according to any one of the preceding claims, **characterized in that** it additionally contains at least one catalyst-filled reaction tube.

7. The tube reactor according to any one of the preceding claims, **characterized in that** the optical wave guide (9), the capillary tube (8) and the protective tube (6) are temperature-resistant to 1,000°C, preferably to 800°C and particularly preferably to 700°C.

8. The tube reactor according to any one of the preceding claims, **characterized in that** the evaluation unit (31) is equipped in order to evaluate optical signals created through Raman scattering and/or through Rayleigh scattering and/or Brillouin scattering.

9. The tube reactor according to Claims 1 to 7, **characterized in that** the evaluation unit (31) is equipped in order to evaluate optical signals created by scattering on Bragg-gratings.

10. The tube reactor according to Claim 9, **characterized in that** in the protective tube (6) at least two optical wave guides (9) each with an axially running rows of Bragg-gratings (36) are located, wherein the Bragg-gratings (36) of the rows are axially offset relative to one another, and in at least the one axial thermal tube section (34) of predetermined length, the measuring points (35) formed by the Bragg-gratings (36) and which are offset relative to one another, have the said distance (a_{M}) of neighbouring measuring points (35), and **in that** the evaluation unit (31) has a device which compose the optical signals reflected by the at least two optical wave guides (9) to form a single continuous series of temperature measurement values.

11. The tube reactor according to any one of the preceding claims, **characterized in that** each optical wave guide (9) is tension-relieved.

12. The tube reactor according to any one of the preceding claims, **characterized in that** the evaluation unit (33) comprises a device which removes external signals from the evaluated temperature profile.

13. The tube reactor according to any one of the preceding claims, **characterized in that** it additionally contains a heat transfer medium thermal tube (17), which is free of catalyst material and at its ends is sealed off against the entering of reaction gas (18) or product gas (19) and into which at least one temperature-sensitive optical wave guide (9) enclosed by a capillary tube (8) or a thermometer with another measurement principle extends, which is connectable for example to the source for optical signals and to the evaluation unit (31), wherein the capillary tube (8) is connected to the heat transfer medium thermal tube wall (42) in a thermally conductive manner.

14. The tube reactor according to any one of the preceding claims, **characterized in that** the thermal tubes (2), at least at one of both their ends, have an elevation (16) .

15. The tube reactor according to Claim 14, **characterized in that** the elevations (16) of the thermal tubes (2) for the measurement of the catalyst temperature are distinct from those of the thermal tubes (17) for the measurement of the heat transfer medium temperature.

## Revendications

1. Réacteur tubulaire pour effectuer des réactions en phase gazeuse catalysées de manière hétérogène, comportant un tube thermique, qui contient un lit de catalyse et qui est baigné en fonctionnement sur son côté extérieur par un caloporteur fluide, dans lequel le lit de catalyse est constitué de particules, et comporte une fibre optique sensible à la température, qui est enveloppée par un tube capillaire, s'étend à l'intérieur du lit de catalyse du tube thermique, présentent des points de mesure avec un écart prescrit entre des points de mesures voisins dans la direction axiale du tube thermique et peut être raccordé à une source de signaux optiques ainsi qu'à une unité d'évaluation pour les signaux optique réfléchis par la fibre optique,
**caractérisé en ce que**
la fibre optique (9) présente au moins dans une longueur prescrite axiale de portion de tube thermique (34), qui contient au moins une partie du lit de catalyse (3) des points de mesure (35) avec un écart (a_{M}) entre des points de mesures voisins (35) dans la direction axiale du tube thermique (2), qui correspond à 0,8 à 5 fois la longueur de câble (l_{K}) la plus courte de tous les parallélépipèdes envisagés, qui sont coordonnés aux volumes minimaux dans les cas dans lesquels les particules (4) du lit de catalyse (3) sont coordonnés aux dimensions extérieures nominales, délimitent respectivement une particule (4) en postulant que la particule présente sa dimension extérieure nominale, et dans d'autres cas respectivement délimitent des particules (4), qui appartiennent à une fraction de masse d'au minimum 70 % du lit de catalyse (3), appartiennent à toutes les particules (4) avec les parallélépipèdes envisagés, dans lequel chaque longueur d'arête est plus longue que la longueur d'arrête la plus courte (lK).

2. Réacteur tubulaire selon la revendication 1, **caractérisé en ce que** dans le lit de catalyse (3) du tube thermique (2) un tube de protection (6) est disposé et la fibre optique (9) s'étend avec le tube capillaire (8) dans le tube de protection (6).

3. Réacteur tubulaire selon la revendication 1 ou 2, **caractérisé en ce que** la fraction en masse s'élève au minimum à 80 %, de manière préférée au minimum à 90 % et de manière particulièrement préférée au minimum à 95 %.

4. Réacteur tubulaire selon une des revendications précédentes, **caractérisé en ce que** dans la longueur prescrite axiale de portion de tube thermique (34) l'écart (aM) entre des points de mesures voisins (35) dans la direction axiale du tube thermique (2) correspond à 1 à 3 fois et de préférence à 1 à 2 fois ladite longueur d'arête la plus courte (lk).

5. Réacteur tubulaire selon une des revendications précédentes, **caractérisé en ce que** dans la longueur prescrite axiale de portion de tube thermique (34) l'écart (aM) entre des points de mesures voisins (35) dans la direction axiale du tube thermique (2) s'élève à au moins 0,5 mm.

6. Réacteur tubulaire selon une des revendications précédentes, **caractérisé en ce que** il contient en outre au moins un tube de réaction rempli de catalyseur.

7. Réacteur tubulaire selon une des revendications précédentes, **caractérisé en ce que** la fibre optique (9), le tube capillaire (8) et le tube de protection (6) sont résistants à des températures allant jusqu'à 1000 °C, de préférence jusqu'à 800 °C et de manière particulièrement préférée jusqu'à 700 °C.

8. Réacteur tubulaire selon une des revendications précédentes, **caractérisée en ce que** l'unité d'évaluation (31) est conçue afin d'évaluer les signaux optiques générés par diffusion Raman et/ou par diffusion de Rayleigh et/ou par diffusion de Brillouin.

9. Réacteur tubulaire selon une des revendications 1 à 7, **caractérisé en ce que** l'unité d'évaluation (31) est conçue afin d'évaluer les signaux optiques générés par diffusion sur des réseaux de Bragg.

10. Réacteur tubulaire selon la revendication 9, **caractérisé en ce que** dans le tube de protection (6) se trouvent au moins deux fibres optiques (9) avec respectivement une rangée s'étendant axialement de réseaux de Bragg (36), dans lequel les réseaux de Bragg (36) des rangées sont décalés les uns par rapport aux autres et dans au moins la longueur prescrite d'une portion axiale de tube thermique (34) les points de mesure (35) décalés les uns par rapport aux autres, formés par les réseaux de Bragg (36) présentent ledit écart (aM) des points de mesure voisins (35), et **en ce que** l'unité d'évaluation (31) dispose d'un dispositif, qui assemble les signaux optique réfléchis par au moins deux fibres optiques (9) en une série continue unique de valeur de mesure de température.

11. Réacteur tubulaire selon une des revendications précédentes, **caractérisé en ce que** chaque fibre optique (9) est détendue par dilatation.

12. Réacteur tubulaire selon une des revendications précédentes, **caractérisé en ce que** l'unité d'évaluation (33) dispose d'un dispositif qui élimine les signaux étrangers du profil de température évalué.

13. Réacteur tubulaire selon une des revendications précédentes, **caractérisé en ce que** il contient en outre un tube thermique de caloporteur (17), qui est exempt de matériaux catalyseur et obturé à ses extrémités contre l'infiltration de gaz de réaction (18) ou de produits gazeux (19) et dans lequel s'étend au moins une fibre optique (9) sensible à la température enveloppée par un tube capillaire (8) ou à un thermomètre avec un autre principe de mesure, qui peut être respectivement raccordé à la source de signaux optiques ainsi qu'à l'unité d'évaluation (31), dans lequel le tube capillaire (8) est reliée de manière conductrice thermiquement avec la paroi de tube thermique de caloporteur (42).

14. Réacteur tubulaire selon une des revendications précédentes, **caractérisé en ce que** les tubes thermiques (2) possèdent sur au moins une de leurs deux extrémités un méplat (16).

15. Réacteur tubulaire selon la revendication 14, **caractérise en ce que** les méplats (16) des tubes thermiques (2) sont différents pour la mesure de la température de catalyseur de ceux des tubes thermiques (17) pour la mesure de la température de caloporteur.
